(19) **Europäisches Patentamt / European Patent Office / Office européen des brevets**

(11) **EP 4 130 605 A1**

(12) **EUROPEAN PATENT APPLICATION**
published in accordance with Art. 153(4) EPC

(43) Date of publication:
**08.02.2023 Bulletin 2023/06**

(21) Application number: **21782348.3**

(22) Date of filing: **29.03.2021**

(51) International Patent Classification (IPC):
***F24V 30/00*** *(2018.01)*

(52) Cooperative Patent Classification (CPC):
**F24V 30/00**

(86) International application number:
**PCT/JP2021/013347**

(87) International publication number:
**WO 2021/200843 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 JP 2020064227**

(71) Applicant: **Clean Planet Inc.**
**Minato-ku**
**Tokyo 105-0022 (JP)**

(72) Inventors:
• **IWAMURA, Yasuhiro**
**Sendai-shi, Miyagi 980-8577 (JP)**
• **ITO, Takehiko**
**Tokyo 105-0022 (JP)**
• **YOSHINO, Hideki**
**Tokyo 105-0022 (JP)**

(74) Representative: **Bandpay & Greuter**
**30, rue Notre-Dame des Victoires**
**75002 Paris (FR)**

(54) **HEAT GENERATING DEVICE**

(57)     Provided is a heat generating device that suppresses heat loss and is excellent in energy efficiency. A heat generating device 10 includes a hollow container 11, a heat generating element 14 provided inside the container 11, a heater 12 for heating the heat generating element 14, a conductive wire part 13 connecting a wall portion of the container 11 and the heater 12, a hydrogen supply unit 15 for supplying a hydrogen-containing hydrogen-based gas to the heat generating element 14, and a vacuum evacuation unit 16 for evacuating the inside of the container 11, and when heater temperature is $T_H$, external environmental temperature is $T_W$, equivalent heat conduction area is $A_{HC}$, equivalent thermal conductivity is $k_{eq}$, equivalent thermal conduction length is $L_{eq}$, sample radiation surface area is $A_S$, sample surface temperature is $T_S$, equivalent emissivity is $\varepsilon_{eq}$, Stefan-Boltzmann constant is $\sigma$, energy required for maintaining operation is $P_m$, and thermal energy generated by the heat generating element 14 is $H_{ex}$, the following formula (1) is satisfied:

$$A_{HC}\eta_{eq}(T_H - T_W) + A_S\varepsilon_{eq}\sigma(T_S^4 - T_W^4) + P_m < H_{ex} \qquad (1)$$

wherein, $\eta_{eq}$ is a value ($k_{eq}/L_{eq}$) obtained by dividing the equivalent thermal conductivity by the equivalent thermal conduction length.

EP 4 130 605 A1

# FIG. 1

## Description

Technical Field

The present invention relates to a heat generating device.

Background Art

In recent years, a heat generation phenomenon in which heat is generated by occluding and discharging hydrogen using a hydrogen storage metal or the like is reported (see, for example, NPL 1). Hydrogen can be generated from water and is thus inexhaustible and inexpensive as a resource, and does not generate a greenhouse gas such as carbon dioxide and is thus clean energy. Unlike a nuclear fission reaction, the heat generation phenomenon using the hydrogen storage metal or the like is safe since there is no chain reaction. Heat generated by occluding and discharging hydrogen can be utilized as it is, and can be further utilized by being converted into electric power. Therefore, the heat is expected as an effective energy source.

Citation List

Non Patent Literature

NPL 1: A. Kitamura, A. Takahashi, K. Takahashi, R. Seto, T. Hatano, Y. Iwamura, T. Itoh, J. Kasagi, M. Nakamura, M. Uchimura, H. Takahashi, S. Sumitomo, T. Hioki, T. Motohiro, Y. Furuyama, M. Kishida, H. Matsune, "Excess heat evolution from nanocomposite samples under exposure to hydrogen isotope gases", International Journal of Hydrogen Energy 43 (2018) 16187-16200.

Summary of Invention

Technical Problem

Research and development of a heat generating device that obtains thermal energy using occluding and discharging of hydrogen has been advanced, but there has been a problem that energy efficiency is low because heat loss is large and energy required to maintain the operation of the device is also large.
Therefore, an object of the present invention is to provide a heat generating device that suppresses heat loss and is excellent in energy efficiency.

Solution to Problem

A heat generating device according to the invention includes: a hollow container, a heat generating element provided inside the container, a heater for heating the heat generating element, a conductive wire part connecting a wall portion of the container and the heater, a hydrogen supply unit for supplying a hydrogen-containing hydrogen-based gas to the heat generating element, and a vacuum evacuation unit for evacuating the inside of the container. The heat generating element includes a base composed of a hydrogen storage metal, a hydrogen storage alloy, or a proton conductor, and a multilayer film provided on a surface of the base; and the multilayer film has a stacking structure in which a first layer and a second layer are stacked, the first layer being made of a hydrogen storage metal or a hydrogen storage alloy and having a thickness of less than 1000 nm, and the second layer being made of a hydrogen storage metal or a hydrogen storage alloy, which is different from that of the first layer, or ceramics and having a thickness of less than 1000 nm. When the heat generating element is heated by the heater, the hydrogen permeates through or diffuses through a heterogeneous material interface which is an interface between the first layer and the second layer by quantum diffusion, and thus the heat generating element generates heat; and when heater temperature is $T_H$ [K], external environmental temperature is $T_W$ [K], equivalent heat conduction area is $A_{HC}$ [m$^2$], equivalent thermal conductivity is $k_{eq}$ [W/mK], equivalent thermal conduction length is $L_{eq}$ [m], sample radiation surface area is $A_S$ [m$^2$], sample surface temperature is $T_S$ [K], equivalent emissivity is $\varepsilon_{eq}$, Stefan-Boltzmann constant is $\sigma$ [W/m$^2$K$^4$], energy required for maintaining operation is $P_m$ [W], and thermal energy generated by the heat generating element is $H_{ex}$ [W], the following formula (1) is satisfied:

$$A_{HC}\eta_{eq}(T_H - T_W) + A_S\varepsilon_{eq}\sigma(T_S^4 - T_W^4) + P_m < H_{ex} \qquad (1)$$

wherein, $\eta_{eq}$ is a value ($k_{eq}/L_{eq}$) obtained by dividing the equivalent thermal conductivity by the equivalent thermal conduction length.

Advantageous Effects of Invention

According to the present invention, heat loss can be suppressed and energy efficiency can be improved.

Brief Description of Drawings

[FIG. 1] FIG. 1 is an explanatory diagram for explaining an outline of a heat generating device according to a first embodiment.
[FIG. 2] FIG. 2 is an explanatory diagram for explaining a detailed configuration of a heat generating device according to the first embodiment.
[FIG. 3] FIG. 3 is a cross-sectional view showing a structure of a heat generating element having a first layer and a second layer.
[FIG. 4] FIG. 4 is an explanatory diagram showing generation of excess heat.
[FIG. 5] FIG. 5 is a perspective view showing a configuration of a heater.
[FIG. 6] FIG. 6 is a perspective view showing a configuration of a reflection unit.
[FIG. 7] FIG. 7 is a perspective view showing a state in which an upper support plate is moved upward.
[FIG. 8] FIG. 8 is a cross-sectional view of a support plate.
[FIG. 9] FIG. 9 is an explanatory diagram for explaining a configuration of a heat generating device according to a second embodiment.
[FIG. 10] FIG. 10 is an explanatory diagram for explaining a configuration of a heat generating device according to a third embodiment.
[FIG. 11] FIG. 11 is an explanatory diagram for explaining an action of the heat generating device according to the third embodiment.
[FIG. 12] FIG. 12 is an explanatory diagram for explaining a configuration of a heat generating device according to a fourth embodiment.
[FIG. 13] FIG. 13 is a cross-sectional view of a heat generating element formed in a bottomed cylindrical shape.
[FIG. 14] FIG. 14 is an explanatory diagram for explaining a configuration of a heat generating device according to a fifth embodiment.
[FIG. 15] FIG. 15 is an explanatory diagram for explaining an action of the heat generating device according to the fifth embodiment.
[FIG. 16] FIG. 16 is a cross-sectional view of a heat generating element formed in a columnar shape.
[FIG. 17] FIG. 17 is an explanatory diagram for explaining a configuration of a heat generating device according to a sixth embodiment.
[FIG. 18] FIG. 18 is a cross-sectional view showing a structure of a heat generating element having a first layer, a second layer, and a third layer.
[FIG. 19] FIG. 19 is a cross-sectional view showing a structure of a heat generating element having a first layer, a second layer, a third layer, and a fourth layer.

Description of Embodiments

[First Embodiment]

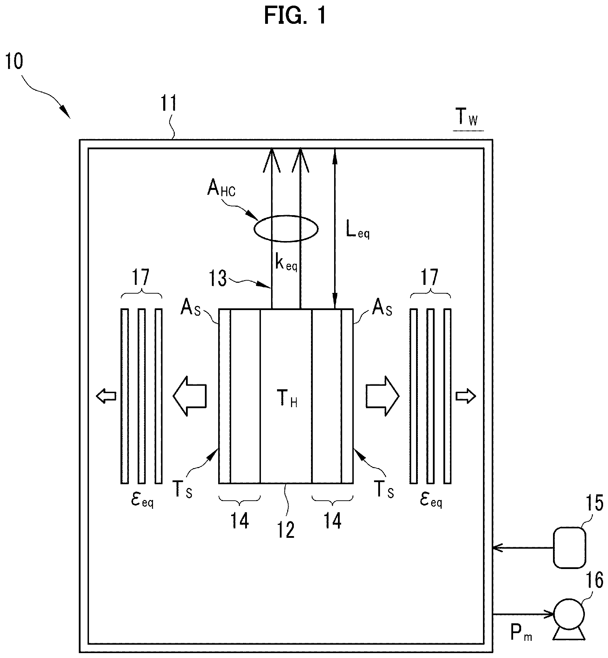

In FIG. 1, the heat generating device 10 includes a container 11, a heater 12, a conductive wire part 13, a heat generating element 14, a hydrogen supply unit 15, a vacuum evacuation unit 16, and a reflection unit 17. The container 11 is a hollow vacuum container. The heater 12 generates heat by applying a voltage and heats the heat generating element 14. The conductive wire part 13 connects the wall portion of the container 11 and the heater 12. The heat generating element 14 is provided inside the container 11. By being heated by the heater 12 in a vacuum state, the heat generating element 14 is heated to a temperature equal to or higher than the temperature heated by the heater 12. Heat generated by the heat generating element 14 which has been heated to a temperature equal to or higher than the temperature heated by the heater 12 is referred to as excess heat. The mechanism by which the heat generating element 14 generates the excess heat will be described later with reference to other drawings. The hydrogen supply unit 15 supplies a hydrogen-containing hydrogen-based gas to the heat generating element 14. The vacuum evacuation unit 16 evacuates the inside of the container 11. The reflection unit 17 reflects the radiant heat radiated by the heat generating element 14.

When heater temperature which is the temperature of the heater 12 is $T_H$ [K], external environmental temperature which is the temperature outside the container 11 is $T_W$ [K], equivalent heat conduction area of the conductive wire part 13 is $A_{HC}$ [m²], equivalent thermal conductivity of the conductive wire part 13 is $k_{eq}$ [W/mK], equivalent thermal conduction length of the conductive wire part 13 is $L_{eq}$ [m], sample radiation surface area which is the surface area of the heat generating element 14 is $A_S$ [m²], sample surface temperature which is the temperature of the surface of the heat generating element 14 is $T_S$ [K], equivalent emissivity between the heat generating element 14 and the wall portion of the container 11 is $\varepsilon_{eq}$, Stefan-Boltzmann constant is $\sigma$ [W/m²K⁴], operation maintaining energy which is the energy required for maintaining operation of the device is $P_m$ [W], and thermal energy generated by the heat generating element 14 is $H_{ex}$ [W], the heat generating device 10 satisfies the above formula (1) . In the above formula (1), $\eta_{eq}$ is a value ($k_{eq}/L_{eq}$) obtained by dividing the equivalent thermal conductivity by the equivalent thermal conduction length. "Equivalent" means a case where a plurality of elements are replaced with one element. For example, when the conductive wire part 13 is composed of two types of conductive wires and the conductive wires have different heat conduction areas, the heat conduction area when each conductive wire is replaced with one conductive wire is referred to as an equivalent heat conduction area. It should be noted that the term "equivalent" in this disclosure includes the case of only one element. For example, when the conductive wire part 13 is composed of one type of conductive wire, the heat conduction area of the conductive wire is also referred to as the equivalent heat conduction area.

The first term on the left side of the above formula (1) represents a heat loss caused by heat conduction from the heater 12 to the container 11 through the conductive wire part 13, and is referred to as a heat conduction energy loss. The second term on the left side of the above formula (1) represents a heat loss due to radiant heat from the heat generating element 14, and is referred to as a radiant energy loss. The third term on the left side of the above formula (1), i.e., the operation maintaining energy, is the energy required to maintain the generation of the excess heat in the heat generating element 14 for a long period of time, and includes at least the electric energy for driving the vacuum evacuation unit 16. In the heat generating device 10, after the heat generating element 14 generates excess heat, the heater 12 is turned off. Therefore, the operation maintaining energy does not include the electric energy for driving the heater 12.

Heat loss due to heat conduction is suppressed by making the contact area of the heat generating device 10 with the outside as small as possible and using a member made of a material having low thermal conductivity. In addition, in the heat generating device 10, heat loss due to radiation is suppressed by suppressing radiant heat of the heat generating element 14 by installing a reflection plate or configuring the container 11 with a material that reflects radiant heat. Further, in the heat generating device 10, the inside of the container 11 is evacuated by a vacuum pump or the like to suppress the convective flow of the hydrogen, thereby suppressing the heat loss due to the convective flow. In the heat generating device 10, after the heat generating element 14 generates excess heat, the heater 12 is turned off. Since the heat generating device 10 can continue generation of excess heat in the heat generating element 14 for a long period of time by using a part of the outputted energy as inputted energy, self-sustained operation is possible.

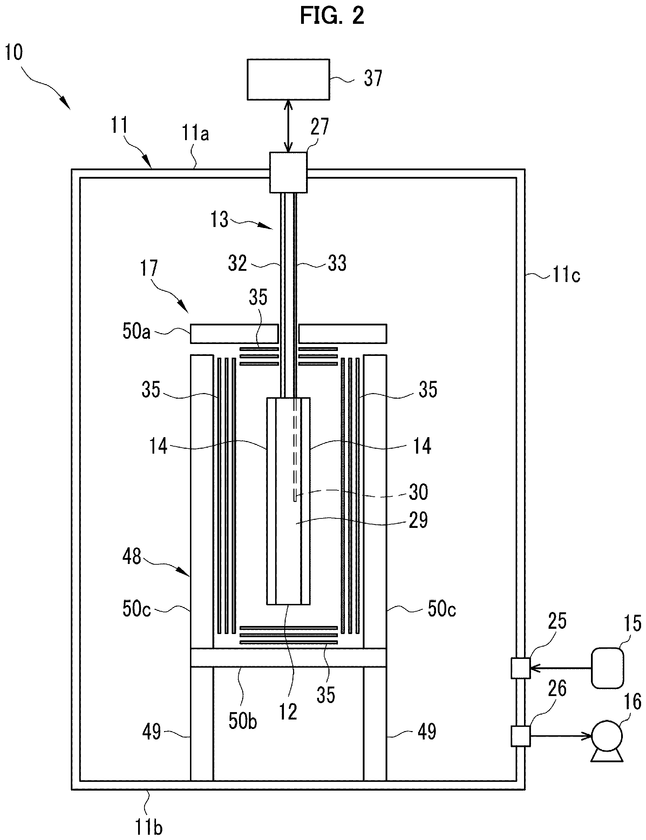

The configuration of the heat generating device 10 according to the first embodiment will be described in detail with reference to FIG. 2.

The container 11 is composed of an upper portion 11a, a bottom portion 11b and a side portion 11c. The upper portion 11a and the bottom portion 11b are spaced apart from each other and are arranged facing each other. The upper portion 11a is located above the bottom portion 11b. The side portion 11c is formed in a cylindrical shape and connects the upper portion 11a and the bottom portion 11b. The container 11 is sealed by the connection of the upper portion 11a, the bottom portion 11b, and the side portion 11c. In the following description, when the upper portion 11a, the bottom portion 11b, and the side portion 11c are not distinguished from each other, they are referred to as wall portion. As a material of the container 11, a material having heat resistance and pressure resistance is used. Examples of the material of the container 11 include carbon steel, austenitic stainless steel, and heat-resistant non-ferrous alloy. The material of the container 11 may be the same material as that of a reflection plate to be described later. By constituting the container 11 by using the same material as that of the reflection plate, the radiant heat of the heat generating element 14 is reflected on the inner surface of the container 11, and the radiant energy loss is suppressed. The shape of the container 11 is not particularly limited, and may be a cylindrical shape, an elliptical cylindrical shape, a rectangular cylindrical shape, or the like. A pressure sensor (not shown) is provided inside the container 11.

The wall portion of the container 11 is provided with a gas introduction port 25, a gas discharge port 26 and a connecting portion 27. The gas introduction port 25 connects the inside of the container 11 and the hydrogen supply unit 15. The gas discharge port 26 connects the inside of the container 11 and the vacuum evacuation unit 16. The connecting portion 27 is connected to the conductive wire part 13. Although the gas introduction port 25 and the gas discharge port 26 are provided in the side portion 11c in the present embodiment, they are not limited thereto and they may be provided in the upper portion 11a or the bottom portion 11b. The connecting portion 27 is provided on the upper portion 11a in the present embodiment, but is not limited thereto and may be provided on the side portion 11c or the bottom portion 11b.

The heater 12 is provided inside the container 11. In the present embodiment, the shape of the heater 12 is a plate shape. The heater 12 includes a heating unit 29 and a temperature sensor 30. The heating unit 29 generates heat when a voltage is applied from a power supply (not shown) provided outside the container 11. The shape of the heating unit 29 in a plan view is a square having a side length of 25 mm. The temperature sensor 30 detects the temperature of the heater 12. The heater 12 raises the temperature of the heat generating element 14 to a predetermined temperature when the operation of the heat generating device 10 is started.

The conductive wire part 13 includes a heating conductive wire part 32 connected to the heating unit 29 and a temperature detecting conductive wire part 33 connected to the temperature sensor 30. The heating conductive wire part 32 and the temperature detecting conductive wire part 33 are electrically connected to a control unit 37 to be described later via the connecting portion 27 of the container 11.

The heat generating element 14 is provided on both surfaces of the heater 12. That is, the heat generating device 10 includes two heat generating elements 14. In the present embodiment, the shape of the heat generating element 14 is a plate shape. The shape of the heat generating element 14 in a plan view is a square having a side length of 25 mm. Among surfaces constituting the heat generating element 14, a surface in contact with the heater 12 is referred to as a back surface, a surface opposite to the back surface is referred to as a front surface, and four surfaces perpendicular to the front surface and the back surface are referred to as side surfaces. The number of the heat generating element 14 is not particularly limited. Details of the configuration of the heat generating element 14 will be described later with reference to other drawings.

The hydrogen supply unit 15 is provided outside the container 11. The hydrogen supply unit 15 introduces a hydrogen-based gas into the inside of the container 11 via the gas introduction port 25. Although not shown, the hydrogen supply unit 15 includes a buffer tank that stores the hydrogen-based gas, a pipe that connects the buffer tank and the gas introduction port 25 of the container 11, and a pressure-regulating valve that regulates the flow rate of the hydrogen-based gas introduced into the inside of the container 11 and the pressure in the pipe. The hydrogen-based gas is a gas containing an isotope of hydrogen. As the hydrogen-based gas, at least one of a deuterium gas and a light hydrogen gas is used. The light hydrogen gas includes a mixture of naturally occurring light hydrogen and deuterium, i.e., a mixture in which the abundance ratio of light hydrogen is 99.985% and the abundance ratio of deuterium is 0.015%. In the following description, when light hydrogen and deuterium are not distinguished from each other, they are referred to as "hydrogen".

The vacuum evacuation unit 16 is provided outside the container 11. The vacuum evacuation unit 16 evacuates the inside of the container 11 via the gas discharge port 26. Although not shown, the vacuum evacuation unit 16 includes a vacuum pump, a pipe connecting the vacuum pump and the gas discharge port 26 of the container 11, and a pressure-regulating valve that regulates the flow rate of the hydrogen-based gas discharged from the inside of the container 11 and the pressure in the pipe. The vacuum evacuation unit 16 continuously evacuates the inside of the container 11 during the operation of the heat generating device 10. As a result, the vacuum state inside the container 11 is maintained, convective flow of hydrogen is suppressed, and heat loss due to the convective flow is suppressed.

The reflection unit 17 is provided inside the container 11. The reflection unit 17 has a box shape as a whole and is configured to cover each heat generating element 14. In the present embodiment, the shape of the reflection unit 17 is a substantially rectangular parallelepiped shape. The reflection unit 17 is formed of a material that reflects radiant heat. The material of the reflection unit 17 is preferably a material that reflects radiant heat and has low thermal conductivity.

The reflection unit 17 has at least a reflection plate 35 corresponding to the surface of the heat generating element 14. The reflection plate 35 reflects radiant heat radiated from the surface of the heat generating element 14 toward the heat generating element 14. The reflection plate 35 has a front surface on the surface of the heat generating element 14 side and a back surface on the surface of the container 11 side. In the present embodiment, there are three sheets of the reflection plate 35 arranged at intervals in a direction orthogonal to the surface of the heat generating element 14. Therefore, the heat generating device 10 has a configuration in which three sheets of the reflection plate 35 are provided for each heat generating element 14. The radiant heat radiated from the surface of the heat generating element 14 may be partially reflected by the reflection plate 35 and partially transmitted through the reflection plate 35. Since the three sheets of the reflection plate 35 are provided, the radiant heat transmitted through the first reflection plate 35 corresponding to the front surface of the heat generating element 14 is reflected by the second reflection plate 35, and the radiant heat transmitted through the second reflection plate 35 is reflected by the third reflection plate 35. As the number of the reflection plate 35 increases, the radiant energy loss can be suppressed more. Here, it is known that heat flux decreases in proportion to $1/(n + 1)$ when n sheets of reflection plate are provided between two surfaces and the emissivity of all the surfaces is equal (see, for example, "Heat Transfer, Revised Fifth Edition, The Japan Society of Mechanical Engineers, 2009, pp. 208-209"). In the present embodiment, since three sheets of the reflection plate 35 are provided between the front surface of the heat generating element 14 and the inner surface of the container 11, the radiant energy loss can be suppressed to about 1/4 as compared with the case where the reflection plate 35 is not provided.

In addition, the reflection unit 17 further includes a plurality of reflection plates 35 respectively corresponding to the four side surfaces of the heat generating element 14. In the present embodiment, three sheets of the reflection plates 35 are provided to be spaced apart from each other in a direction orthogonal to one side surface of the heat generating element 14. Therefore, the reflection unit 17 is configured to cover the two heat generating elements 14 with a total of eighteen reflection plates 35. As a material of the reflection plate 35, Ni, Cu, Mo, or the like is used. The shape of the reflection plate 35 in a plan view is not particularly limited, but is rectangular in the present embodiment. Among the plurality of reflection plates 35, the three reflection plates 35 arranged above are provided with through holes into which the conductive wire part 13 to be described later is inserted. Further, each reflection plate 35 is provided with a through hole (not shown) into which a support column 53 to be described later is inserted.

The heat generating device 10 further includes a control unit 37. The control unit 37 is provided outside the container 11. The control unit 37 is electrically connected to each unit of the heat generating device 10 and controls the operation of each unit. The control unit 37 includes, for example, an arithmetic device (Central Processing Unit), a storage unit such as a read-only memory (Read Only Memory) or a random access memory (Random Access Memory). The arithmetic device executes various kinds of arithmetic processing using, for example, a program and data stored in the storage unit. In addition, the control unit 37 is electrically connected to a power supply (not shown) provided outside the container 11, and controls a voltage applied from the power supply to the heater 12.

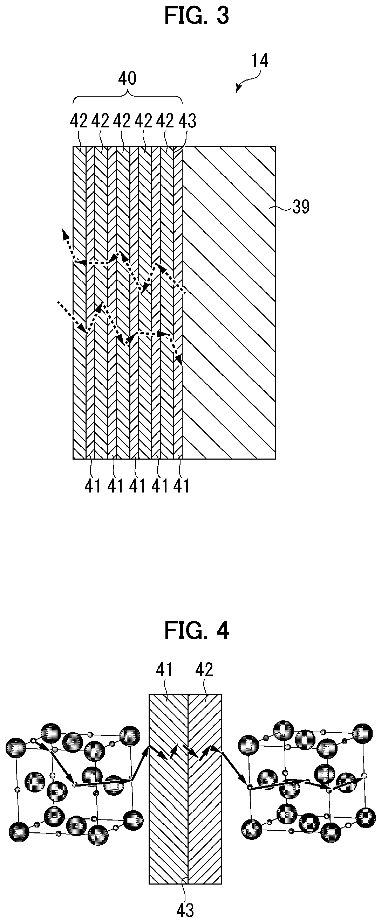

The configuration of the heat generating element 14 will be described in detail with reference to FIG. 3 and FIG. 4. As shown in FIG. 3, the heat generating element 14 includes a base 39 and a multilayer film 40. The base 39 is made of a hydrogen storage metal, a hydrogen storage alloy, or a proton conductor. Examples of the hydrogen storage metal include Ni, Pd, V, Nb, Ta, and Ti. Examples of the hydrogen storage alloy include LaNis, CaCus, $MgZn_2$, $ZrNi_2$, $ZrCr_2$, TiFe, TiCo, $Mg_2Ni$, and $Mg_2Cu$. Examples of the proton conductor include a $BaCeO_3$-based conductor (for example, Ba $(Ce_{0.95}Y_{0.05})O_{3-6}$), a $SrCeO_3$-based conductor (for example, Sr $(Ce_{0.95}Y_{0.05})O_{3-6}$), a $CaZrO_3$-based conductor (for example, $CaZr_{0.95}Y_{0.05}O_{3-\alpha}$), a $SrZrO_3$-based conductor (for example, $SrZr_{0.9}Y_{0.1}O_{3-\alpha}$, $\beta$-$Al_2O_3$, and $\beta$-$Ga_2O_3$. The base 39 may be formed of a porous body or a hydrogen permeable membrane. The porous body has pores of a size that allows passage of the hydrogen-based gas. The porous body is formed of, for example, a metal, a nonmetal, ceramics, or the like. The porous body is preferably formed of a material that does not inhibit the reaction between the hydrogen-based gas and the multilayer film 40. The hydrogen permeable membrane is formed of, for example, a hydrogen storage metal or a hydrogen storage alloy. The hydrogen permeable membrane includes one having a mesh-like sheet.

The multilayer film 40 is provided on the base 39. Although the multilayer film 40 is provided on the front surface of the base 39 in FIG. 3, the multilayer film 40 may be provided on the back surface of the base 39 or on both surfaces of the base 39. When the multilayer film 40 is provided on the front surface or the back surface of the base 39, the base 39 is provided on the front surface of the heater 12 (not shown). When the multilayer films 40 are provided on both surfaces of the base 39, one of the multilayer films 40 is provided on the surface of the heater 12. The multilayer film 40 has a first layer 41 made of a hydrogen storage metal or a hydrogen storage alloy and a second layer 42 made of a hydrogen storage metal or a hydrogen storage alloy, which is different from that of the first layer 41, or ceramics. An interface between the base 39 and the first layer 41 and an interface between the first layer 41 and the second layer 42 are heterogeneous material interfaces 43.

The first layer 41 is made of, for example, any one of Ni, Pd, Cu, Mn, Cr, Fe, Mg, Co, and an alloy thereof. The alloy for forming the first layer 41 is preferably an alloy made of two or more of Ni, Pd, Cu, Mn, Cr, Fe, Mg, and Co. As the alloy for forming the first layer 41, an alloy obtained by adding an additive element to Ni, Pd, Cu, Mn, Cr, Fe, Mg, or Co may be used.

The second layer 42 is made of, for example, any one of Ni, Pd, Cu, Mn, Cr, Fe, Mg, Co, an alloy thereof, and SiC. The alloy for forming the second layer 42 is preferably an alloy made of two or more of Ni, Pd, Cu, Mn, Cr, Fe, Mg, and Co. As the alloy for forming the second layer 42, an alloy obtained by adding an additive element to Ni, Pd, Cu, Mn, Cr, Fe, Mg, or Co may be used.

When the types of elements are expressed as "first layer 41-second layer 42", the combination of the first layer 41 and the second layer 42 is preferably Pd-Ni, Ni-Cu, Ni-Cr, Ni-Fe, Ni-Mg, or Ni-Co. When the second layer 42 is made of ceramics, the "first layer 41-the second layer 42" is preferably Ni-SiC.

The thickness of the first layer 41 and the thickness of the second layer 42 are each preferably less than 1000 nm. When the thickness of each of the first layer 41 and the second layer 42 is 1000 nm or more, it becomes difficult for hydrogen to permeate through the multilayer film 40. In addition, by setting the thickness of each of the first layer 41 and the second layer 42 to be less than 1000 nm, it is possible to maintain a nanostructure that does not exhibit bulk characteristics. The thickness of each of the first layer 41 and the second layer 42 is more preferably less than 500 nm. By setting the thickness of each of the first layer 41 and the second layer 42 to be less than 500 nm, it is possible to maintain a nanostructure that does not completely exhibit bulk characteristics.

In FIG. 3, the multilayer film 40 has a configuration in which the first layer 41 and the second layer 42 are alternately stacked in this order on the surface of the base 39. Each of the first layer 41 and the second layer 42 includes five layers. The number of layers of the first layer 41 and the second layer 42 may be appropriately changed. The multilayer film 40 may have a configuration in which the second layer 42 and the first layer 41 are alternately stacked in this order on the surface of the base 39. It is sufficient that the multilayer film 40 has one or more first layers 41 and one or more second layers 42, and one or more heterogeneous material interfaces 43 are formed.

As shown in FIG. 4, the heterogeneous material interface 43 is permeable to hydrogen atoms. FIG. 4 is a schematic diagram showing a state in which hydrogen atoms in a metal lattice of the first layer 41 permeate through the heterogeneous material interface 43 and move into a metal lattice of the second layer 42 when the first layer 41 and the second layer 42 each made of a hydrogen storage metal having a face-centered cubic structure are made to occlude hydrogen and then the first layer 41 and the second layer 42 are heated. A mechanism in which the heat generating element 14 generates excess heat will be described with reference to FIG. 4.

The heat generating element 14 occludes hydrogen by the base 39 and the multilayer film 40 when the hydrogen-based gas is introduced into the container 11. Even when the introduction of the hydrogen-based gas into the inside of the container 11 is stopped, the heat generating element 14 maintains a state where hydrogen is occluded in the base 39 and the multilayer film 40. When the heating of the heat generating element 14 is started by the heater 12, the hydrogens occluded in the base 39 and the multilayer film 40 are discharged and quantum diffusion occurs while hopping the inside of the multilayer film 40. It is known that hydrogen is light and undergoes quantum diffusion while hopping at a site (octahedral site or tetrahedral site) occupied by hydrogen of a certain substance A and substance B. When the heat generating element 14 is heated in a vacuum state, hydrogen permeates through the heterogeneous material interface 43 by quantum diffusion or diffuses through the heterogeneous material interface 43 by quantum diffusion to generate excess heat.

The heat generating element 14 is supplied with the hydrogen-based gas, is heated by the heater 12, and is raised to a predetermined temperature to generate excess heat. The heat generating element 14 is heated to, for example, 270 to 300°C by the heater 12, thereby generating excess heat. The temperature of the heat generating element 14 in a state of generating excess heat is set to fall within a range of, for example, 300°C or higher and 1500°C or lower. When excess heat is generated, the heat generating element 14 continues to generate heat for a predetermined period even if the heater 12 is turned off.

An example of a method for producing the heat generating element 14 will be described. The heat generating element 14 can be produced using, for example, a sputtering method. First, the plate-shaped base 39 is formed. Next, the first layer 41 and the second layer 42 are alternately formed on the base 39 to form the multilayer film 40. Thus, the heat generating element 14 in which the multilayer film 40 is provided on the surface of the base 39 is obtained. The base 39 is preferably formed to be thicker than the first layer 41 and the second layer 42, and Ni is used as the material of the base 39, for example. It is preferable that the first layer 41 and the second layer 42 are formed continuously in a vacuum state . This is because a natural oxide film is not formed between the first layer 41 and the second layer 42 and only the heterogeneous material interface 43 is formed. The production method of the heat generating element 14 is not limited to the sputtering method, and a vapor deposition method, a wet method, a thermal spraying method, an electroplating method, or the like can be used. The shape of the heat generating element 14 is a plate shape in the present embodiment, but is not limited thereto, and may be a cylindrical shape or a columnar shape.

An example of a heat generation method using the heat generating element 14 will be described. First, a hydrogen-based gas is introduced into the inside of the container 11 to cause the heat generating element 14 to occlude the hydrogen contained in the hydrogen-based gas. Next, the introduction of the hydrogen-based gas is stopped, the inside of the container 11 is evacuated, and the heat generating element 14 is heated to discharge the hydrogen occluded in the heat generating element 14. In the heat generating element 14, when hydrogen is occluded, the hydrogen permeates through the heterogeneous material interface 43 by quantum diffusion to generate heat, and when hydrogen is discharged, the hydrogen permeates through the heterogeneous material interface 43 by quantum diffusion to generate heat. Occluding and discharging of hydrogen may be repeatedly performed. A system of generating heat of the heat generating element 14 by alternately occluding and discharging hydrogen is called a batch system.

The method and results of an experiment for generating heat of the heat generating element 14 in a batch system will be described below.

As the base 39 of the heat generating element 14, a Ni substrate made of Ni and having a thickness of 0.1 mm was used. The first layer 41 made of Cu and the second layer 42 made of Ni were alternately formed on the surface of the base 39 to obtain the multilayer film 40. The thickness of the first layer 41 was 14 nm. The thickness of the second layer 42 was 2 nm. Each of the first layer 41 and the second layer 42 included five layers. Two sheets of the heat generating element 14 were prepared and arranged on both surfaces of a plate-shaped ceramic heater. The heat generating element 14 was placed inside a vacuum container together with the ceramic heater. Then, the introduction of the hydrogen-based gas into the inside of the vacuum container and the evacuation of the inside of the vacuum container were repeated. The hydrogen-based gas was introduced into the inside of the vacuum container at a pressure of about 50 Pa. The time for occluding hydrogen in the heat generating element 14 was set at about 64 hours. In addition, before occluding hydrogen, the inside of the vacuum container was previously baked with a heater for about 36 hours at 200°C or higher to remove moisture or the like adhering to the surfaces of the heat generating element 14. The input power of the heater was switched to 9W, 18W, and 27W. It was confirmed that excess heat was generated at the temperature within the range of 500°C to 1000°C. The excess heat was about 5W at around 900°C. The excess heat per unit area in the vicinity of 900°C was determined to be about 0.5 W/cm$^2$. It was confirmed that even when the heater was turned off after the heat generating element 14 generated excess heat, heat generation continued for a predetermined period.

Another example of a heat generation method using the heat generating element 14 will be described. A difference is created in the partial pressure of hydrogen on both sides of the heat generating element 14. For example, the heat generating element 14 is housed in a container, and the inside of the container is partitioned into a first chamber and a second chamber. A hydrogen-based gas is introduced into the inside of the first chamber, and the inside of the second chamber is evacuated. As a result, a hydrogen partial pressure in the first chamber increases and a hydrogen partial pressure in the second chamber decreases, resulting in a difference in the hydrogen partial pressure between both sides of the heat generating element 14. When a difference in the hydrogen partial pressure occurs between both sides of the heat generating element 14, hydrogen molecules contained in the hydrogen-based gas are adsorbed on one surface (referred to as a front surface) of the heat generating element 14 arranged on the high-pressure side, and the hydrogen molecules are dissociated into two hydrogen atoms. The dissociated hydrogen atoms penetrate into the inside of the heat generating element 14. That is, hydrogen is occluded in the heat generating element 14. The hydrogen atoms diffuse and pass through the inside of the heat generating element 14. On the other surface (referred to as a back surface) of the heat generating element 14 arranged on the low-pressure side, the hydrogen atoms that have passed through the heat generating element 14 are recombined and discharged as hydrogen molecules. In other words, hydrogen is discharged from the heat generating element 14. Thus, the heat generating element 14 allows hydrogen to permeate from the high-pressure side to the low-pressure side. The term "permeation" as used herein means that hydrogen is occluded in the front surface of the heat generating element and discharged from the back surface of the heat generating element. The heat generating element 14 generates heat by occluding and discharging hydrogen. By generating a difference in the hydrogen partial pressure between both sides of the heat generating element 14, hydrogen occlusion on the front surface of the heat generating element 14 and hydrogen discharge on the back surface of the heat generating element 14 are simultaneously performed, and since the hydrogen continuously permeates the heat generating element 14, excess heat can be efficiently generated. A system in which the heat generating element 14 is caused to generate heat by permeating hydrogen using a difference in the hydrogen partial pressure is referred to as a permeation system. In the following description, the hydrogen partial pressure may be referred to as "pressure of hydrogen".

The method and results of an experiment for generating heat of the heat generating element 14 in a permeation system will be described below.

As the base 39 of the heat generating element 14, a Ni substrate made of Ni and having a thickness of 0.1 mm was used. The first layer 41 made of Cu and the second layer 42 made of Ni were alternately formed on both surfaces of the base 39 to obtain the multilayer film 40. Each of the first layer 41 and the second layer 42 included six layers. The heat generating element 14 was baked at 300°C for 3 days before the experiment was started. The experiment was started after baking as described above. The heat generating element 14 was fixed to the tip of a pipe made of stainless steel using a VCR joint. The tip of the pipe was placed inside a quartz glass tube. A hydrogen-based gas was introduced from the proximal end of the pipe, and the inside of the quartz glass tube was evacuated. The internal space of the pipe is a first chamber, and the internal space of the quartz glass tube is a second chamber. The hydrogen partial pressure in the first chamber was adjusted to 100 kPa. The hydrogen partial pressure in the second chamber was adjusted to 1 $\times$ 10$^{-4}$ Pa. The heater was driven to heat the heat generating element 14 at a predetermined preset temperature. An electric furnace was used as the heater. The preset temperature was changed about every half day and increased stepwise within the range of 300°C to 900°C. It was confirmed that excess heat was generated at the temperature within the range of 300°C to 900°C. It was confirmed that the excess heat was about 10 W at around 800°C. The excess heat per unit area in the vicinity of 800°C was determined to be about 5 W/cm$^2$. It was confirmed that even when the heater was turned off after the heat generating element 14 generated excess heat, heat generation continued for a predetermined period.

As described above, the thermal energy $H_{ex}$ generated by the heat generating element 14 is about 5 W in the batch system and about 10 W in the permeation system. The heat generating device 10 according to the present embodiment is configured to generate heat in the batch system.

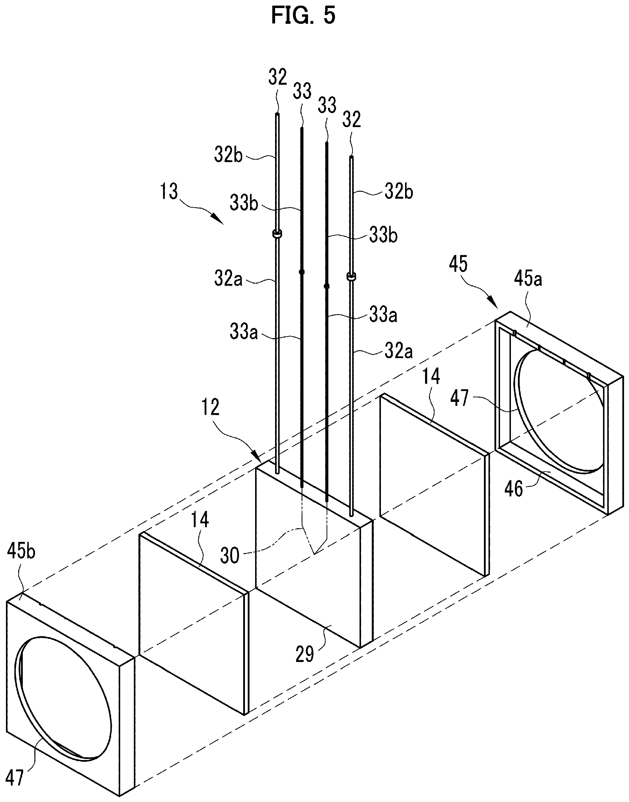

The configuration of the heater 12 will be described in detail with reference to FIG. 5. In the present embodiment, the heater 12 is a plate-shaped ceramic heater having a bult-in thermocouple. The heater 12 is not limited to a ceramic heater but may be an electric furnace or the like. The temperature sensor 30 is a thermocouple built in the heating unit 29. In the thermocouple, the material of the element wire of the negative electrode is platinum (Pt), and the material of the element wire of the positive electrode is a platinum-rhodium alloy (PtRh) containing 13% rhodium. In the present embodiment, the heater temperature $T_H$ is measured by a thermocouple as the temperature sensor 30.

The heater 12 and the heat generating element 14 are integrated using a holder 45. The holder 45 is made of, for example, ceramics. The holder 45 has a square shape in a plan view. The holder 45 is composed of a pair of holder half bodies 45a and 45b. The holder half body 45a and the holder half body 45b have the same configuration. Therefore, the holder half body 45a will be described, and description of the holder half body 45b will be omitted. The holder half body 45a has a stepped portion 46 provided on a surface in contact with the heat generating element 14, and an opening 47 opened in the thickness direction. In FIG. 5, the stepped portion 46 of the holder half body 45b is hidden on the back side of the paper. When the pair of holder half bodies 45a and 45b are integrated with each other, the heat generating element 14 is disposed in the stepped portion 46, and the heat generating element 14 is exposed from the opening 47. In the present embodiment, the opening 47 has a circular shape with a diameter of 23 mm, but is not limited thereto. The heat generating element 14 housed in the holder 45 radiates radiant heat toward the reflection unit 17 from the surface corresponding to each opening 47 of the pair of holder half bodies 45a and 45b. Therefore, in the present embodiment, the area of the opening 47 is used as the sample radiation surface area As.

The configuration of the conductive wire part 13 will be described in detail. The heating conductive wire part 32 includes a heater conducting wire 32a connected to the heating unit 29 and a conducting wire 32b connecting the heater conducting wire 32a and the connecting portion 27. The temperature detecting conductive wire part 33 includes a thermocouple conducting wire 33a which is a portion of the thermocouple protruding from the heating unit 29, and a compensation conducting wire 33b that connects the thermocouple conducting wire 33a and the connecting portion 27. The conductive wire part 13 has two heater conducting wires 32a, two conducting wires 32b, two thermocouple conducting wires 33a, and two compensation conducting wires 33b.

The conductive wire part 13 is a heat conduction path through which heat is conducted from the heater 12 to the container 11. The equivalent heat conduction area $A_{HC}$ of the conductive wire part 13 is obtained based on the respective cross-sectional areas of the heater conducting wire 32a, the conducting wire 32b, the thermocouple conducting wire 33a, and the compensation conducting wire 33b constituting the conductive wire part 13. The equivalent thermal conductivity $K_{eq}$ of the conductive wire part 13 is obtained based on the respective thermal conductivities of the heater conducting wire 32a, the conducting wire 32b, the thermocouple conducting wire 33a, and the compensation conducting wire 33b constituting the conductive wire part 13. The equivalent thermal conduction length $L_{eq}$ of the conductive wire part 13 is obtained based on the respective lengths of the heater conducting wire 32a, the conducting wire 32b, the thermocouple conducting wire 33a, and the compensation conducting wire 33b constituting the conductive wire part 13.

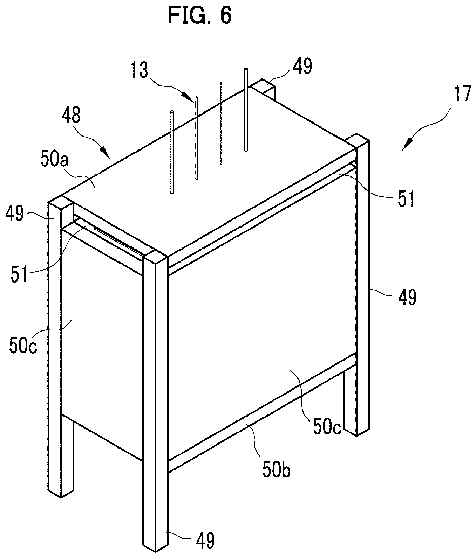

The configuration of the reflection unit 17 will be described in detail with reference to FIG. 6 to FIG. 8. As shown in FIG. 6, the reflection unit 17 includes a plurality of reflection plates 35 and a support portion 48 that supports the plurality of reflection plates 35. The support portion 48 is formed of a material having low thermal conductivity such as $SiO_2$ or ceramics, and has a function as a heat insulator that reflects radiant heat from the heat generating element 14. The support portion 48 includes a plurality of bases 49 fixed to the bottom portion 11b of the container 11 at predetermined intervals from each other and a plurality of support plates 50a to 50c fixed to each base 49. In the present embodiment, the support portion 48 includes four bases 49, one support plate 50a constituting an upper portion, one support plate 50b constituting a bottom portion, and four support plates 50c constituting a side portion. Each base 49 is formed in a columnar shape and extends from the bottom portion 11b to the upper portion 11a of the container 11. Each of the support plates 50a to 50c is configured in a box shape as a whole, and is a substantially rectangular parallelepiped in the present embodiment. Each of the support plates 50a to 50c is fixed to each of the bases 49 using a screw member (not shown) . The shape of each of the support plates 50a to 50c in a plan view is not particularly limited, but is a rectangle in the present embodiment.

Between the support plate 50a at the upper portion and each of the support plates 50c at the side portion, a gas flow portion 51 through which the hydrogen-based gas flows is provided. The gas flow portion 51 may be provided between the support plate 50b at the bottom portion and each of the support plates 50c at the side portion, or may be provided between the four support plates 50c at the side portion.

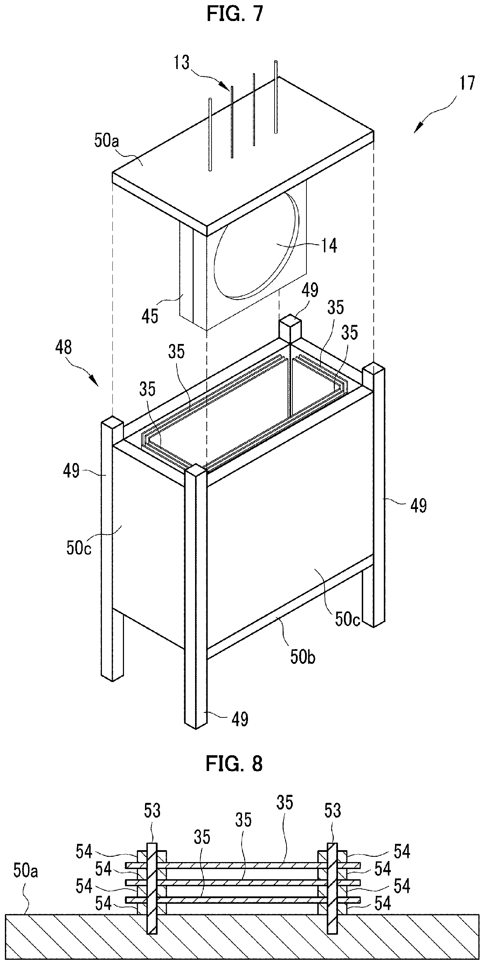

FIG. 7 shows a state in which the support plate 50a at the upper portion is moved upward. The heat generating element 14 and the heater 12 (not shown) are housed inside the support portion 48. A through hole into which the conductive wire part 13 of the heater 12 is inserted is provided in the support plate 50a at the upper portion. A plurality of reflection plates 35 are supported on the inner surface of each of the support plates 50a to 50c.

As shown in FIG. 8, each of the support plates 50a to 50c is provided with a plurality of support columns 53 and a plurality of spacers 54. The support column 53 and the spacer 54 will be described using the support plate 50a. The support column 53 is inserted into a through hole provided in the reflection plate 35. The spacer 54 is arranged between the support plate 50a and the reflection plate 35 and between the plurality of reflection plates 35. Thus, the plurality of reflection plates 35 are arranged at predetermined intervals.

Each of the support plates 50a to 50c is fixed to each of the bases 49 such that the surfaces on which the plurality of reflection plates 35 are provided face each other (see FIG. 6 and FIG. 7). Thus, the heat generating element 14 is surrounded by the plurality of reflection plates 35, the radiant heat radiated by the heat generating element 14 is reflected by the plurality of reflection plates 35, and heat loss due to the radiation is suppressed.

As described above, when the operation of the heat generating device 10 is started, the heater 12 is turned on to raise the temperature of the heat generating element 14 to a predetermined temperature, thereby generating excess heat from the heat generating element 14. When the operation of the heat generating device 10 is stopped, the heat generating element 14 is cooled. As a method of cooling the heat generating element 14, for example, low-temperature water, inert gas, or the like is introduced into the inside of the container 11. The heat generating element 14 can also be cooled by increasing the heat loss due to the convective flow of hydrogen by setting the hydrogen pressure inside the container 11 to, for example, 1 atm or more.

The heat conduction energy loss, the radiant energy loss, and the operation maintaining energy are calculated by using the above formula (1).

First, the heat conduction energy loss is estimated. The estimated conditions and results are as follows.

The heater conducting wire 32a is made of Ni, has a thermal conductivity of 40 W/mK, has a diameter of 0.5 mm, and has a length of 100 mm. The conducting wire 32b is made of Cu, has a thermal conductivity of 400 W/mK, has a diameter of 0.5 mm, and has a length of 50 mm. In the thermocouple conducting wire 33a, a material for the element wire of the negative electrode is Pt, a material for the element wire of the positive electrode is PtRh, each element wire has a thermal conductivity of 80 W/mK, the thermocouple conducting wire 33a has a diameter of 0.3 mm, and has a length of 90 mm. The compensation conducting wire 33b is made of Cu, has a thermal conductivity of 400 W/mK, has a diameter of 0.3 mm, and has a length of 60 mm. The heater temperature $T_H$ is set to 900°C (1173.15 K). The external environmental temperature $T_W$ is set to 27°C (300.15 K). When the first term on the left side of the above formula (1) is used, the heat conduction energy loss occurring in the heating conductive wire part 32 (the heater conducting wire 32a and the conducting wire 32b) is 0.88 W, and the heat conduction energy loss occurring in the temperature detecting conductive wire part 33 (the thermocouple conducting wire 33a and the compensation conducting wire 33b) is 0.39 W. Therefore, the total heat conduction energy loss in the conductive wire part 13 is estimated as 1.27 W.

Next, the radiant energy loss is estimated. The estimated conditions and results are as follows.

A diameter of the opening 47 of the holder 45 is defined as 23 mm, and an area of a surface of the heat generating element 14 corresponding to the opening 47 is defined as a sample radiation surface area $A_S$. The sample surface temperature $T_S$ is set to 700°C (973.15 K). The external environmental temperature $T_W$ is set to 27°C (300.15 K). The emissivity $\varepsilon$ is all set to 0.11. Using the second term on the left side of the above formula (1), the radiant energy loss is estimated as 2.43 W. This estimation is based on the case where there is no reflection plate 35. In the present embodiment, since three sheets of reflection plate 35 are provided for each heat generating element 14, the radiant energy loss is 0.61 W which is approximately 1/4 of the estimated result in the case where the reflection plate 35 is not provided.

Next, the operation maintaining energy is calculated. The estimated conditions and results are as follows.

While the heat generating device 10 is in operation, the inside of the container 11 is evacuated by the vacuum evacuation unit 16, and the hydrogen pressure inside the container 11, p, is adjusted to about $10^{-4}$ Pa. Since the operation maintaining energy is a constant pressure process, it can be calculated using the following formula (2) and the following formula (3).

$$p\Delta V = \Delta n_1 RT \qquad (2)$$

$$P_m = \Delta n_2 RT \qquad (3)$$

p is the hydrogen pressure inside the container 11. $\Delta V$ is the volume of the space inside the container 11. $\Delta n_1$ is the number of moles of hydrogen present inside the container 11 before hydrogen occlusion by the heat generating element 14. R is the gas constant. T is the temperature inside the container 11. $\Delta n_2$ is the number of moles of hydrogen present inside the container 11 after hydrogen occlusion by the heat generating element 14. First, $\Delta n_1$ is calculated using the above formula (2). Next, $\Delta n_2$ is calculated by subtracting the number of moles of hydrogen occluded in the heat generating element 14 from the calculated $\Delta n_1$. Here, it is assumed that the number of moles of hydrogen occluded in the heat generating element 14 is about $10^{-4}$ mol at the maximum and the hydrogen occluded in the heat generating element 14 is discharged from the heat generating element 14 in about 6 hours. Using the above formula (3), the operation maintaining energy is estimated as $P_m$ of about $4 \times 10^{-5}$ W.

The thermal energy generated by the heat generating element 14 is $H_{ex}$ of about 5 W in the batch system as described above. When there is no reflection plate 35, the total value of the heat conduction energy loss (1.27 W), the radiant energy loss (2.43 W), and the operation maintaining energy ($4 \times 10^{-5}$ W) is about 3.70 W. Therefore, even when the reflection plate 35 is not provided, the thermal energy generated by the heat generating element 14 becomes larger than the total value of the heat conduction energy loss, the radiant energy loss, and the operation maintaining energy, and the above formula (1) is satisfied. Thus, it is possible to suppress the heat loss and realize the heat generating device having excellent energy efficiency. Therefore, the heat generating device according to the present invention may not include the reflection unit 17 and the reflection plate 35, but may include the container 11, the heater 12, the conductive wire part 13, the heat generating element 14, the hydrogen supply unit 15, and the vacuum evacuation unit 16.

In the heat generating device 10 according to the present embodiment, since three sheets of the reflection plate 35 are provided for each heat generating element 14, the radiant energy loss is suppressed to approximately 1/4 as compared with the case where the reflection plate 35 is not provided. Therefore, in the heat generating device 10, the total value of the heat conduction energy loss, the radiant energy loss, and the operation maintaining energy is about 1.88 W, and the above formula (1) is sufficiently satisfied, so that the energy efficiency is further improved.

[Second Embodiment]

In the above first embodiment, the temperature of the heater 12 is detected by using the thermocouple (temperature sensor 30) built in the heater 12. However, in the second embodiment, a radiation temperature indicator is used. In the following description, the same members as those of the first embodiment are denoted by the same reference numerals, and description thereof will be omitted.

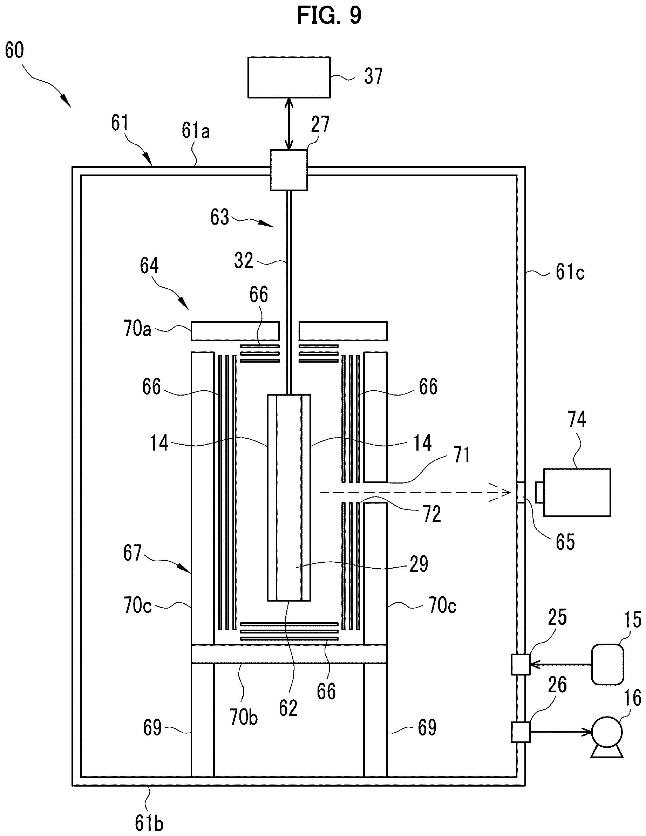

As shown in FIG. 9, a heat generating device 60 includes a container 61, a heater 62, a conductive wire part 63, the heat generating element 14, the hydrogen supply unit 15, the vacuum evacuation unit 16, and a reflection unit 64. The heat generating device 60 is configured to generate heat in a batch system.

The container 61 includes an upper portion 61a, a bottom portion 61b, and a side portion 61c. Since the upper portion 61a and the bottom portion 61b have the same configurations as the upper portion 11a and the bottom portion 11b of the first embodiment, description thereof will be omitted. The side portion 61c has a window portion 65 that transmits infrared rays. The window portion 65 has a configuration in which silica glass is fitted into a through hole formed in the side portion 61c. The container 61 is different from the container 11 of the first embodiment in that the window portion 65 is provided in the side portion 61c.

The heater 62 is constituted by the heating unit 29. The heater 62 is different from the heater 12 (see FIG. 2) of the first embodiment in that the temperature sensor 30 is not built in.

The conductive wire part 63 is constituted by the heating conductive wire part 32 connected to the heating unit 29. The conductive wire part 63 is different from the conductive wire part 13 (see FIG. 2) of the first embodiment in that the conductive wire part 63 does not include the temperature detecting conductive wire part 33.

The reflection unit 64 includes a plurality of reflection plates 66 and a support portion 67 that supports the plurality of reflection plates 66. The support portion 67 includes a plurality of bases 69 and a plurality of support plates 70a to 70c fixed to the plurality of bases 69. The support plates 70a to 70c are configured in a box shape as a whole. A first measurement hole 71 is provided in the support plate 70c constituting a side portion of the support portion 67. The first measurement hole 71 is provided at a position corresponding to the window portion 65 provided in the container 61 in the support plate 70c of the side portion. A second measurement hole 72 is provided in each of the plurality of reflection plates 66 supported by the support plate 70c provided with the first measurement hole 71. Each second measurement hole 72 is provided at a position corresponding to the first measurement hole 71 in the plurality of reflection plates 66. The support portion 67 is different from the support portion 48 of the first embodiment in that the first measurement hole 71 is provided in the support plate 70c and the second measurement hole 72 is provided in the reflection plate 66.

The heat generating device 60 further includes a temperature sensor 74. The temperature sensor 74 is provided outside the container 61. The temperature sensor 74 is a radiation temperature indicator that detects the temperature of the heater 62 from the window portion 65 provided in the container 61 via the first measurement hole 71 of the support plate 70c and the second measurement hole 72 of the reflection plate 66. In the second embodiment, the heater temperature $T_H$ is measured by a radiation temperature indicator as the temperature sensor 74.

In the heat generating device 60, since the conductive wire part 63 includes only the heating conductive wire part 32 and is configured to detect the temperature of the heater 62 by using the radiation temperature indicator as the temperature sensor 74, the heat conduction energy loss is suppressed more than that of the heat generating device 10 of the above first embodiment having the temperature detecting conductive wire part 33. Therefore, since the heat generating device 60 is configured to satisfy the above formula (1), it is excellent in energy efficiency.

[Third Embodiment]

While the first and second embodiments are configured to perform heat generation by a batch system, the third embodiment is configured to perform heat generation by a permeation system.

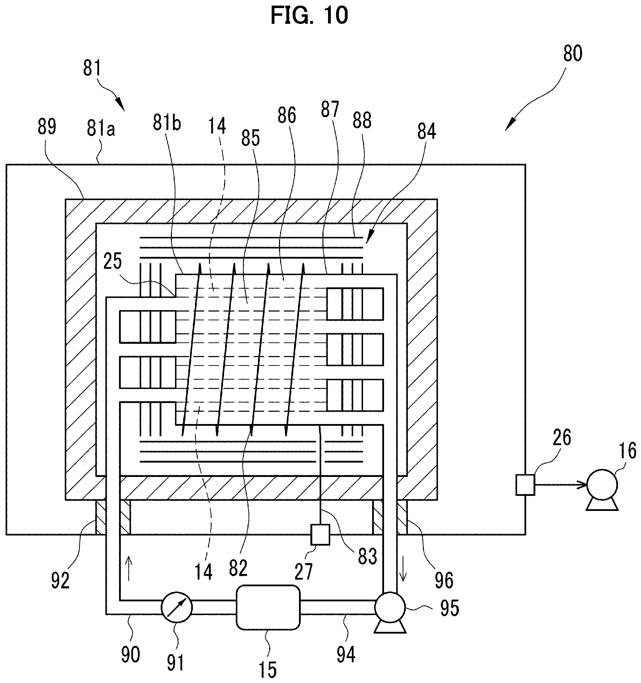

In FIG. 10, a heat generating device 80 includes a container 81, a heater 82, a conductive wire part 83, the heat generating element 14, the hydrogen supply unit 15, the vacuum evacuation unit 16, and a reflection unit 84.

The container 81 is composed of a first container 81a and a second container 81b provided inside the first container 81a. Each of the first container 81a and the second container 81b is a hollow vacuum container, and is constituted by an upper portion, a bottom portion, and a side portion, similarly to the container 11 of the first embodiment. The wall portion of the first container 81a is provided with the gas discharge port 26 and the connecting portion 27. The vacuum evacuation unit 16 evacuates the inside of the first container 81a. The wall portion of the second container 81b is provided with the gas introduction port 25 and a gas recovery port 87 to be described later. In the present embodiment, three gas introduction ports 25 and four gas recovery ports 87 are provided in the wall portion of the second container 81b. The hydrogen supply unit 15 introduces a hydrogen-based gas into the inside of the second container 81b.

In the third embodiment, a plurality of heat generating elements 14 are provided inside the second container 81b. In FIG. 10, six heat generating elements 14 are provided. The plurality of heat generating elements 14 are arranged at intervals from each other in a direction orthogonal to the front surface or the back surface. The inside of the second container 81b is partitioned into a plurality of first chambers 85 and a plurality of second chambers 86 by the plurality of heat generating elements 14. The first chamber 85 and the second chamber 86 are alternately arranged in the arrangement direction of the plurality of heat generating elements 14. The first chamber 85 is connected to the gas introduction port 25. The second chamber 86 is connected to the gas recovery port 87. The pressure of the first chamber 85 is increased by introducing the hydrogen-based gas from the gas introduction port 25. The second chamber 86 is depressurized by recovering the hydrogen-based gas from the gas recovery port 87. As a result, the hydrogen partial pressure in the first chamber 85 becomes higher than the hydrogen partial pressure in the second chamber 86. As described above, in the third embodiment, a difference in hydrogen pressure (hydrogen partial pressure) is generated between the first chamber 85 and the second chamber 86.

The heater 82 is provided inside the first container 81a and heats the plurality of heat generating elements 14 via the second container 81b. The heater 82 is, for example, an electric heating wire of an electric resistance heating type, and is wound around the outer periphery of the second container 81b. The heater 82 is electrically connected to a power supply (not shown) and generates heat when a voltage is applied from the power supply. The heater 82 may be an electric furnace disposed so as to cover the outer periphery of the second container 81b.

The conductive wire part 83 connects the connecting portion 27 provided on the wall portion of the first container 81a and the heater 82. The conductive wire part 83 is electrically connected to a control unit (not shown) and a power supply (not shown) provided outside the first container 81a via the connecting portion 27.

The reflection unit 84 reflects the radiant heat radiated by the heat generating element 14. The reflection unit 84 also reflects radiant heat radiated by the heater 82. The reflection unit 84 includes a plurality of reflection plates 88 and a support portion (not shown) that supports the plurality of reflection plates 88. The reflection unit 84 is covered with a heat insulating material 89.

The heat generating device 80 further includes a temperature sensor (not shown), and detects the temperature of the heater 82 using the temperature sensor. As the temperature sensor, for example, a radiation temperature indicator is used as in the second embodiment.

The hydrogen supply unit 15 and the gas introduction port 25 are connected by a hydrogen-introducing pipe 90. The hydrogen-introducing pipe 90 introduces the hydrogen-based gas from the hydrogen supply unit 15 into the first chamber 85 through the gas introducing port 25. The hydrogen-introducing pipe 90 is provided with a pressure regulating valve 91. The pressure regulating valve 91 regulates the flow rate of the hydrogen-based gas introduced into the first chamber 85 and the pressure in the hydrogen-introducing pipe 90. A portion of the hydrogen-introducing pipe 90 between the first container 81a and the heat insulating material 89 is inserted into a heat insulating pipe 92 to be heat-insulated.

The hydrogen supply unit 15 and the gas recovery port 87 are connected by a hydrogen recovery pipe 94. The hydrogen recovery pipe 94 recovers the hydrogen-based gas in the second chamber 86 from the gas recovery port 87. The hydrogen recovery pipe 94 is provided with a circulation pump 95. The circulation pump 95 recovers the hydrogen-based gas in the second chamber 86 into the hydrogen recovery pipe 94, pressurizes the hydrogen-based gas to a predetermined pressure, and sends the hydrogen-based gas to a buffer tank (not shown) of the hydrogen supply unit 15. The flow rate of the hydrogen-based gas circulated by the circulation pump 95 is 0.1 SCCM. As the circulation pump 95, for example, a metal bellows pump is used. A portion of the hydrogen recovery pipe 94 between the first container 81a and the heat insulating material 89 is inserted into a heat insulating pipe 96 to be heat-insulated.

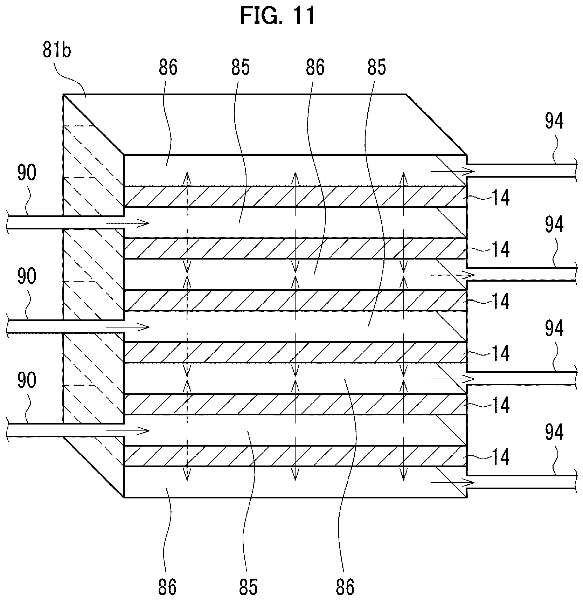

As shown in FIG. 11, due to the difference in hydrogen partial pressure generated between the first chamber 85 and the second chamber 86, the hydrogen-based gas introduced from the hydrogen-introducing pipe 90 into the first chamber 85 permeates through the heat generating element 14, moves to the second chamber 86, and is recovered in the hydrogen recovery pipe 94. Each heat generating element 14 generates excess heat respectively due to the permeation of the hydrogen-based gas. In this way, the heat generating device 80 is configured to generate heat in a permeation system.

The heater 82 is turned on when the operation of the heat generating device 80 is started, and is turned off after the heat generating element 14 generates excess heat. The circulation pump 95 continuously circulates the hydrogen-based gas during the operation of the heat generating device 80. Therefore, the operation maintaining energy does not include the electric energy for driving the heater 82, but includes the electric energy for driving the vacuum evacuation unit 16 and the electric energy for driving the circulation pump 95. The electric energy for driving the vacuum evacuation unit 16 is $4 \times 10^{-5}$ W as described above. The electric energy for driving the circulation pump 95 is $1 \times 10^{-3}$ W at a flow rate of 0.1 SCCM.

In the heat generating device 80, since the circulation pump 95 is used, the operation maintaining energy is slightly larger than that of the heat generating device 10 of the first embodiment in which the pump for circulating the hydrogen-based gas is not used. However, since the heat generating device 80 is configured to generate heat by a permeation system, a larger thermal energy $H_{ex}$ (about 10 W) can be obtained than the heat generating device 10 in a batch system of the first embodiment in which the generated thermal energy $H_{ex}$ is about 5 W. In the heat generating device 80, the operation maintaining energy is increased as compared with the heat generating device 10, but the increment of the generated thermal energy is larger than the increment of the operation maintaining energy. Therefore, since the heat generating device 80 is configured to satisfy the above formula (1), it is excellent in energy efficiency.

[Fourth Embodiment]

Although the hydrogen-based gas is circulated by using the circulation pump 95 in the third embodiment, in the fourth embodiment, the hydrogen-based gas is not circulated.

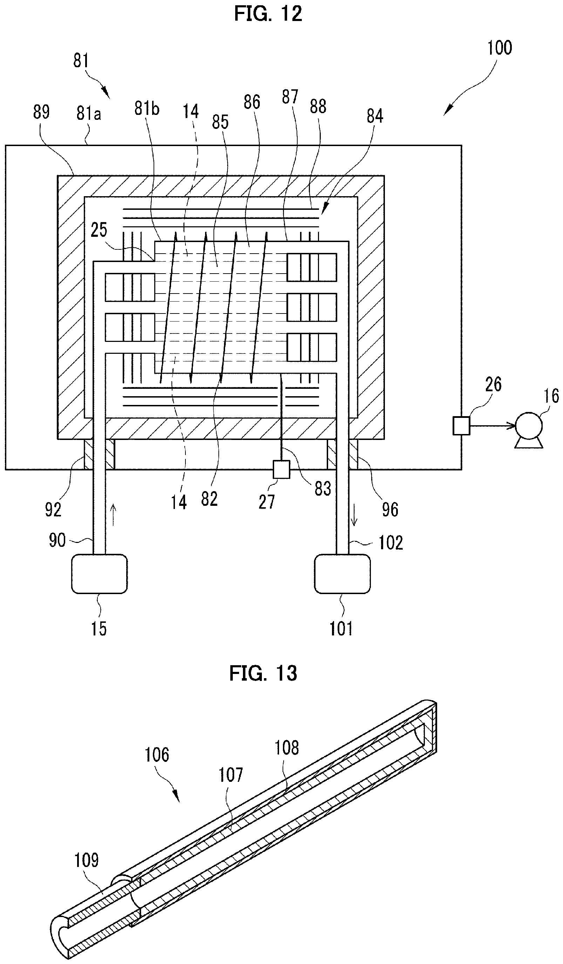

In FIG. 12, a heat generating device 100 includes the container 81, the heater 82, the conductive wire part 83, the heat generating element 14, the hydrogen supply unit 15, the vacuum evacuation unit 16, and the reflection unit 84. The heat generating device 100 further includes a gas tank 101 that stores inert gas and a gas pipe 102 that connects the gas tank 101 and the gas recovery port 87. The heat generating device 100 is different from the heat generating device 80 of the third embodiment in that the gas tank 101 and the gas pipe 102 are provided instead of the hydrogen-recovery pipe 94 and the circulation pump 95. As the inert gas, for example, argon gas, nitrogen gas or the like is used. The inert gas in the gas tank 101 is introduced into the inside of the second chamber 86 through the gas pipe 102 before the operation of the heat generating device 100 is started. In this way, the gas tank 101 has a function as an inert gas introduction portion for introducing the inert gas into the inside of the second chamber 86.

In the heat generating device 100, when the inert gas is introduced into the inside of the second chamber 86, a difference in hydrogen partial pressure is generated between the first chamber 85 and the second chamber 86. Due to the difference in the hydrogen partial pressure generated between the first chamber 85 and the second chamber 86, the hydrogen-based gas in the first chamber 85 permeates through the heat generating element 14, moves to the second chamber 86, and is sent to the gas tank 101 through the gas recovery port 87 and the gas pipe 102. Each heat generating element 14 generates excess heat due to the permeation of the hydrogen-based gas. In this way, the heat generating device 100 is configured to generate heat in a permeation system.

By periodically replacing the gas tank 101, it is possible to maintain a state in which a difference in hydrogen partial pressure is generated between the first chamber 85 and the second chamber 86. The gas tank 101 may be provided with a hydrogen permeable membrane to remove hydrogen accumulated in the inside of the gas tank 101.

Since a pump for circulating the hydrogen-based gas is not used in the heat generating device 100, the operation maintaining energy is smaller than that of the heat generating device 80 of the third embodiment using the circulation pump 95. Therefore, since the heat generating device 100 is configured to satisfy the above formula (1), it is excellent in energy efficiency.

[Fifth Embodiment]

Although the heat generating element 14 has a plate shape in each of the above-described embodiments, the heat generating element has a cylindrical shape in the fifth embodiment.

As shown in FIG. 13, a heat generating element 106 is formed in a bottomed cylindrical shape with one end opened and the other end closed. The heat generating element 106 has the same configuration as that of the heat generating element 14 of the first embodiment except that it has a bottomed cylindrical shape. The heat generating element 106 has a configuration in which a multilayer film 108 is provided on the surface of a base 107. Since the materials of the base 107 and the multilayer film 108 are the same as those in the first embodiment, description thereof will be omitted. The base 107 is provided with an attachment tube 109. The attachment tube 109 is formed of, for example, stainless steel. Although the heat generating element 106 is formed in a bottomed cylindrical shape in FIG. 13, it may be formed in a bottomed rectangular cylindrical shape.

An example of a method for producing the heat generating element 106 will be described. For the heat generating element 106, the base 107 formed in a bottomed cylindrical shape is prepared, and the multilayer film 108 is formed on the outer surface of the base 107 using a wet film forming method. As a result, the bottomed cylindrical heat generating element 106 is formed. As the wet film forming method, a spin coating method, a spray coating method, a dipping method or the like is used. The multilayer film 108 may be formed by an atomic layer deposition (ALD) method, or the multilayer film 108 may be formed on the base 107 while the base 107 is rotated with the use of a sputtering apparatus including a rotation mechanism for rotating the base 107. Note that the multilayer film 108 is not limited to being provided on the outer surface of the base 107, and may be provided on the inner surface of the base 107 or on both surfaces of the base 107.

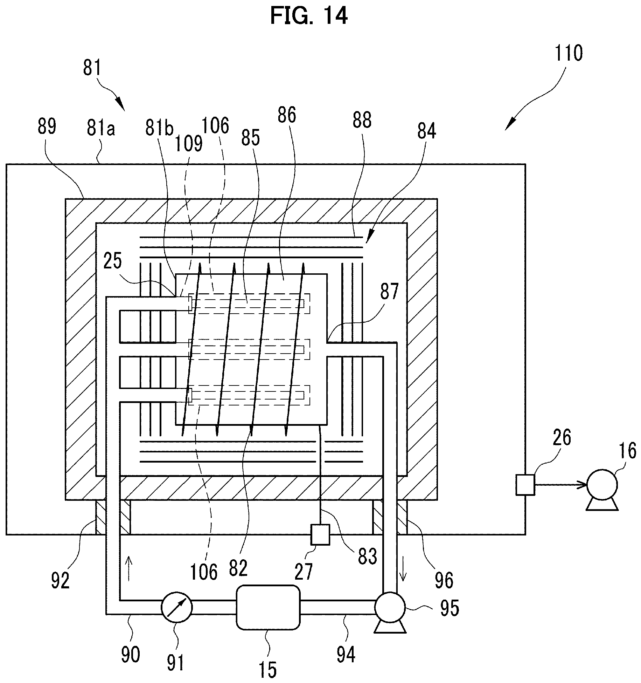

As shown in FIG. 14, the heat generating device 110 includes a plurality of heat generating elements 106. The heat generating device 110 has the same configuration as that of the heat generating element 80 of the third embodiment except that a bottomed cylindrical heat generating element 106 is used. The heat generating device 110 includes the container 81, the heater 82, the conductive wire part 83, a plurality of heat generating elements 106, the hydrogen supply unit 15, the vacuum evacuation unit 16, and the reflection unit 84.

The plurality of heat generating elements 106 are provided inside the second container 81b. The attachment pipe 109 of the heat generating element 106 is connected to the gas introduction port 25 provided in the wall portion of the second container 81b. The first chamber 85 is formed by the inner surface of the heat generating element 106. The second chamber 86 is formed by the inner surface of the second container 81b and the outer surface of the heat generating element 106. Therefore, in the heat generating element 106, the base 107 is disposed on the first chamber 85 side (high pressure side), and the multilayer film 108 is disposed on the second chamber 86 side (low pressure side) (see FIG. 13). Due to the difference in the hydrogen partial pressure generated between the first chamber 85 and the second chamber 86, the hydrogen-based gas introduced into the first chamber 85 from the gas introduction port 25 and the attachment pipe 109 permeates through the heat generating element 106 and moves to the second chamber 86. Each heat generating element 106 generates excess heat due to the permeation of the hydrogen-based gas. In this way, the heat generating device 110 is configured to generate heat in a permeation system.

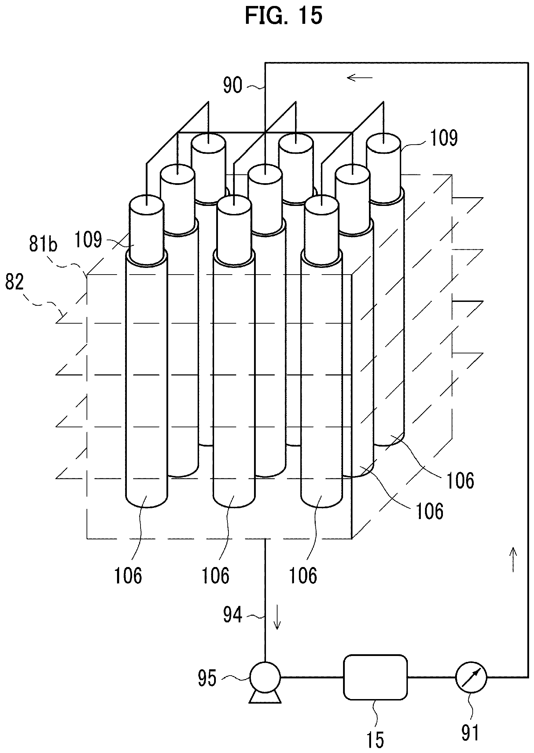

As shown in FIG. 15, in the heat generating device 110, nine heat generating elements 106 are provided inside the second container 81b. In the present embodiment, nine gas introduction ports 25 (not shown) and one gas recovery port 87 (not shown) are provided in the wall portion of the second container 81b. The attachment pipe 109 of each heat generating element 106 and the hydrogen-introducing pipe 90 are connected to each other via the gas introduction port 25, and the hydrogen-based gas is introduced into the inside (first chamber 85) of each heat generating element 106. The gas recovery port 87 of the second container 81b is connected to the hydrogen recovery pipe 94, and the hydrogen-based gas in the second chamber 86 is recovered. The recovered hydrogen-based gas is pressurized to a predetermined pressure by the circulation pump 95 and sent to a buffer tank (not shown) of the hydrogen supply unit 15. The hydrogen-based gas in the hydrogen supply unit 15 is introduced again into the inside (first chamber 85) of each heat generating element 106 through the gas recovery port 87 and the hydrogen-introducing pipe 90, and moves to the outside (second chamber 86) of each heat generating element 106. In this way, the heat generating device 110 can circulate the hydrogen-based gas.

The heat generating device 110 has the same configuration as that of the heat generating device 80 of the third embodiment except that the heat generating element 106 is used. Therefore, similarly to the heat generating device 80 of the third embodiment, since the heat generating device 110 is configured to satisfy the above formula (1), it is excellent in energy efficiency.

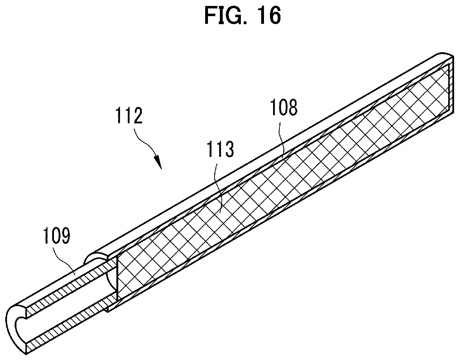

As the heat generating device 110, a heat generating element 112 formed in a columnar shape shown in FIG. 16 may be used instead of the heat generating element 106. The heat generating element 112 includes a base 113 formed in a columnar shape and the multilayer film 108 provided on the surface of the base 113. The heat generating element 112 differs from the heat generating element 106 by having a solid base 113. The base 113 improves the mechanical strength of the heat generating element 112 while allowing the hydrogen-based gas to pass therethrough. Although the heat generating element 112 is formed in a cylindrical shape in FIG. 16, it may be formed in a prismatic shape.

[Sixth Embodiment]

Although the hydrogen-based gas is circulated by using the circulation pump 95 in the fifth embodiment, in the sixth embodiment, the hydrogen-based gas is not circulated.

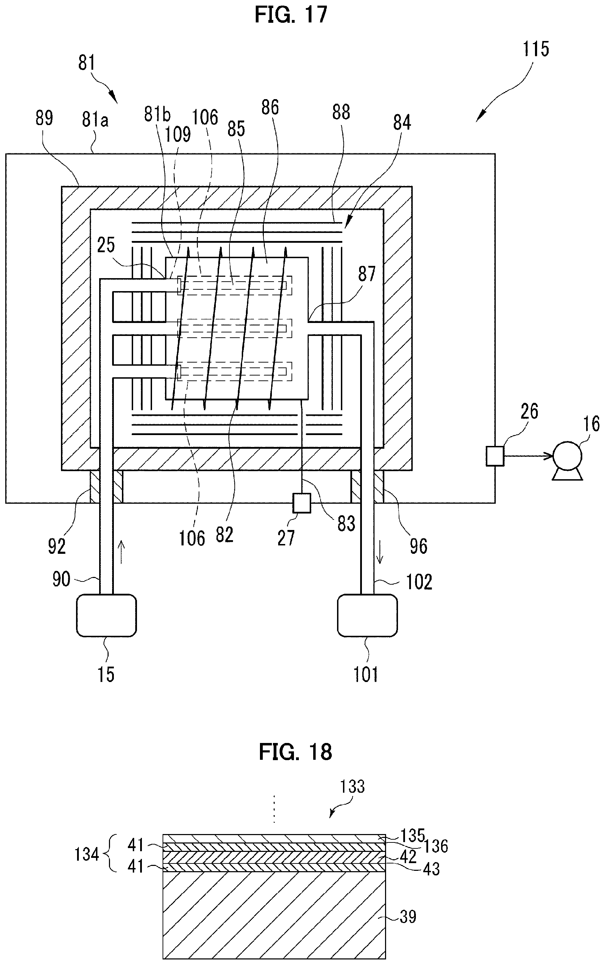

As shown in FIG. 17, a heat generating device 115 includes the container 81, the heater 82, the conductive wire part 83, the heat generating element 106, the hydrogen supply unit 15, the vacuum evacuation unit 16, the reflection unit 84, the gas tank 101, and the gas pipe 102. The heat generating device 115 is different from the heat generating device 110 of the fifth embodiment in that the gas tank 101 and the gas pipe 102 are provided instead of the hydrogen-recovery pipe 94 and the circulation pump 95.

In the heat generating device 115, the hydrogen-based gas is introduced into the inside of the first chamber 85 and the inert gas is introduced into the inside of the second chamber 86, so that a difference in hydrogen partial pressure is generated between the first chamber 85 and the second chamber 86. Due to the difference in the hydrogen partial pressure generated between the first chamber 85 and the second chamber 86, the hydrogen-based gas in the first chamber 85 permeates through the heat generating element 106, moves to the second chamber 86, and is sent to the gas tank 101 through the gas recovery port 87 and the gas pipe 102. Each heat generating element 106 generates excess heat respectively due to the permeation of the hydrogen-based gas. In this way, the heat generating device 115 is configured to generate heat in a permeation system.

Since a pump for circulating the hydrogen-based gas is not used in the heat generating device 115, the operation maintaining energy is smaller than that of the heat generating device 110 of the fifth embodiment using the circulation pump 95. Therefore, since the heat generating device 115 is configured to satisfy the above formula (1), it is excellent in energy efficiency.

The present invention is not limited to the above-described embodiments, and can be appropriately modified without departing from the scope of the present invention.

Although the multilayer film 40 of the heat generating element 14 and the multilayer film 108 of the heat generating element 106 and the heat generating element 112 are composed of the first layer 41 and the second layer 42, the configuration of the multilayer film is not limited thereto.

A first example of the multilayer film will be described below.

As shown in FIG. 18, a heat generating element 133 includes the base 39 and a multilayer film 134. The multilayer film 134 further includes a third layer 135 in addition to the first layer 41 and the second layer 42. Description of the base 39, the first layer 41, and the second layer 42 will be omitted. The third layer 135 is made of a hydrogen storage metal, a hydrogen storage alloy, or ceramics different from those of the first layer 41 and the second layer 42. The thickness of the third layer 135 is preferably less than 1000 nm. In FIG. 18, the first layer 41, the second layer 42, and the third layer 135 are stacked on the surface of the base 39 in the order of the first layer 41, the second layer 42, the first layer 41, and the third layer 135. The first layer 41, the second layer 42, and the third layer 135 may be stacked on the surface of the base 39 in the order of the first layer 41, the third layer 135, the first layer 41, and the second layer 42. That is, the multilayer film 134 has a stacking structure in which the first layer 41 is provided between the second layer 42 and the third layer 135. The multilayer film 134 may include one or more third layers 135. An interface between the first layer 41 and the third layer 135 is a heterogeneous material interface 136. The heterogeneous material interface 136 is permeable to hydrogen atoms in the same manner as the heterogeneous material interface 43.

The third layer 135 is made of, for example, any one of Ni, Pd, Cu, Cr, Fe, Mg, Co, an alloys thereof, SiC, CaO, $Y_2O_3$, TiC, $LaB_6$, SrO, and BaO. The alloy for forming the third layer 135 is preferably an alloy made of two or more of Ni, Pd, Cu, Cr, Fe, Mg, and Co. As the alloy for forming the third layer 135, an alloy obtained by adding an additive element to Ni, Pd, Cu, Cr, Fe, Mg, or Co may be used.

In particular, the third layer 135 is preferably made of any one of CaO, $Y_2O_3$, TiC, $LaB_6$, SrO, and BaO. In the heat generating element 133 having the third layer 135 made of any one of CaO, $Y_2O_3$, TiC, $LaB_6$, SrO, and BaO, the amount of hydrogen occlusion increases, the amount of hydrogen permeating through the heterogeneous material interface 43 and the heterogeneous material interface 136 increases, and a high output of excess heat can be achieved. The thickness of the third layer 135 made of any one of CaO, $Y_2O_3$, TiC, $LaB_6$, SrO, and BaO is preferably 10 nm or less. Accordingly, hydrogen atoms easily permeate through the multilayer film 134. The third layer 135 made of any one of CaO, $Y_2O_3$, TiC, $LaB_6$, SrO, and BaO may not be formed into a complete film shape and may be formed into an island shape. The first layer 41 and the third layer 135 are preferably formed continuously in a vacuum state. Accordingly, between the first layer 41 and the third layer 135, no natural oxide film is formed and only the heterogeneous material interface 136 is formed.

As a combination of the first layer 41, the second layer 42, and the third layer 135, it is preferably Pd-CaO-Ni, Pd-$Y_2O_3$-Ni, Pd-TiC-Ni, Pd-$LaB_6$-Ni, Ni-CaO-Cu, Ni-$Y_2O_3$-Cu, Ni-TiC-Cu, Ni-$LaB_6$-Cu, Ni-Co-Cu, Ni-CaO-Cr, Ni-$Y_2O_3$-Cr, Ni-TiC-Cr, Ni-$LaB_6$-Cr, Ni-CaO-Fe, Ni-$Y_2O_3$-Fe, Ni-TiC-Fe, Ni-$LaB_6$-Fe, Ni-Cr-Fe, Ni-CaO-Mg, Ni-$Y_2O_3$-Mg, Ni-TiC-Mg, Ni-$LaB_6$-Mg, Ni-CaO-Co, Ni-$Y_2O_3$-Co, Ni-TiC-Co, Ni-$LaB_6$-Co, Ni-CaO-SiC, Ni-$Y_2O_3$-SiC, Ni-TiC-SiC, or Ni-$LaB_6$-SiC when types of elements are expressed as "first layer 41-third layer 135-second layer 42".

A second example of the multilayer film will be described below.

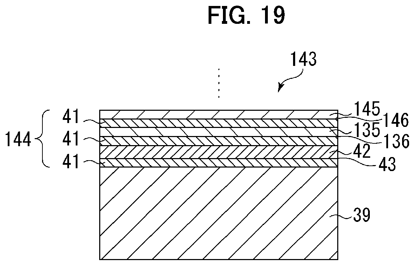

As shown in FIG. 19, a heat generating element 143 includes the base 39 and a multilayer film 144. The multilayer film 144 further includes a fourth layer 145 in addition to the first layer 41, the second layer 42, and the third layer 135. The fourth layer 145 is made of a hydrogen storage metal, a hydrogen storage alloy, or ceramics different from those of the first layer 41, the second layer 42, and the third layer 135. The thickness of the fourth layer 145 is preferably less than 1000 nm. In FIG. 19, the first layer 41, the second layer 42, the third layer 135, and the fourth layer 145 are stacked on the surface of the base 39 in the order of the first layer 41, the second layer 42, the first layer 41, the third layer 135, the first layer 41, and the fourth layer 145. The first layer 41, the second layer 42, the third layer 135, and the fourth layer 145 may be stacked on the surface of the base 39 in the order of the first layer 41, the fourth layer 145, the first layer 41, the third layer 135, the first layer 41, and the second layer 42. That is, the multilayer film 144 has a stacking structure in which the second layer 42, the third layer 135, and the fourth layer 145 are stacked in an arbitrary order, and the first layer 41 is provided between the second layer 42 and the third layer 135, and the third layer 135 and the fourth layer 145. The multilayer film 144 may include one or more fourth layers 145. An interface between the first layer 41 and the fourth layer 145 is a heterogeneous material interface 146. The heterogeneous material interface 146 is permeable to hydrogen atoms in the same manner as the heterogeneous material interface 43 and the heterogeneous material interface 136.

The fourth layer 145 is made of, for example, any one of Ni, Pd, Cu, Cr, Fe, Mg, Co, an alloys thereof, SiC, CaO, $Y_2O_3$, TiC, $LaB_6$, SrO, and BaO. The alloy for forming the fourth layer 145 is preferably an alloy made of two or more of Ni, Pd, Cu, Cr, Fe, Mg, and Co. As the alloy for forming the fourth layer 145, an alloy obtained by adding an additive element to Ni, Pd, Cu, Cr, Fe, Mg, or Co may be used.

In particular, the fourth layer 145 is preferably made of any one of CaO, $Y_2O_3$, TiC, $LaB_6$, SrO, and BaO. In the heat generating element 143 having the fourth layer 145 made of any one of CaO, $Y_2O_3$, TiC, $LaB_6$, SrO, and BaO, the amount of hydrogen occlusion increases, the amount of hydrogen permeating through the heterogeneous material interface 43, the heterogeneous material interface 136, and the heterogeneous material interface 146 increases, and a high output of excess heat can be achieved. The thickness of the fourth layer 145 made of any one of CaO, $Y_2O_3$, TiC, $LaB_6$, SrO, and BaO is preferably 10 nm or less. Accordingly, hydrogen atoms easily permeate through the multilayer film 144. The fourth layer 145 made of any one of CaO, $Y_2O_3$, TiC, $LaB_6$, SrO, and BaO may not be formed into a complete film shape and may be formed into an island shape. The first layer 41 and the fourth layer 145 are preferably formed continuously in a vacuum state. Accordingly, between the first layer 41 and the fourth layer 145, no natural oxide film is formed and only the heterogeneous material interface 146 is formed.

As a combination of the first layer 41, the second layer 42, the third layer 135, and the fourth layer 145, it is preferably Ni-CaO-Cr-Fe, Ni-$Y_2O_3$-Cr-Fe, Ni-TiC-Cr-Fe, or Ni-$LaB_6$-Cr-Fe when types of elements are expressed as "first layer 41-fourth layer 145-third layer 135-second layer 42".

In the present invention, thermal energy (referred to as usable energy) corresponding to a value obtained by subtracting each energy on the left side from the thermal energy on the right side of the above formula (1) can be used for various applications. The usable energy can be recovered, for example, by means of a heating medium. The heating medium is heated to a high temperature by being given usable energy. The high-temperature heating medium is used for, for example, home heating, a home water heater, an automobile heater, an agricultural heater, a road heater, a heat source for seawater desalination, and a geothermal power generation auxiliary heat source. As the heating medium, a gas or a liquid can be used, and it is preferable that the heating medium has excellent thermal conductivity and is chemically stable. As the gas, for example, helium gas, argon gas, hydrogen gas, nitrogen gas, water vapor, air, carbon dioxide, or the like is used. As the liquid, for example, water, molten salt (such as $KNO_3$ (40%)-$NaNO_3$ (60%)), liquid metal (such as Pb) or the like is used. As the heating medium, a mixed phase heating medium in which solid particles are dispersed in a gas or a liquid may be used. Examples of the solid particles include a metal, a metal compound, an alloy, and ceramics. As the metal, copper, nickel, titanium, cobalt or the like is used. As the metal compound, an oxide, a nitride, a silicide or the like of the above-mentioned metal is used. As the alloy, stainless steel, chromium molybdenum steel or the like is used. As the ceramics, alumina or the like is used. The usable energy is not limited to the case where it is recovered by using a heating medium, but may be recovered as electric energy by using, for example, a thermoelectric element.

Applications for the usable energy include heat exchangers and power units. Examples of the heat exchanger include an apparatus that performs heat exchange between a heating medium and a gas, an apparatus that performs heat exchange between a heating medium and a liquid, and an apparatus that performs heat exchange between a heating medium and a solid. The apparatus that performs heat exchange between a heating medium and a gas is used for air conditioning, preheating of air to be supplied to a combustion apparatus, generation of hot air for drying or hot air for heating, and the like. Examples of the combustion apparatus include a boiler, a rotary kiln, a heat treatment furnace for metals, a heating furnace for metal processing, a hot-air furnace, a firing furnace for ceramics, a petroleum refining tower, a dry distillation furnace, and a drying furnace. The apparatus that performs heat exchange between a heating medium and a liquid is used as a heat source of a boiler, oil heating, a chemical reaction tank, and the like. The apparatus that performs heat exchange between a heating medium and a solid is used for a double-pipe rotary heater, heating of particulate matter in a double pipe, and the like. Examples of the power unit include a gas turbine, a steam turbine, a Stirling engine, and an ORCS (Organic Rankine Cycle System).

The usable energy may be used to separate carbon dioxide ($CO_2$) from an exhaust gas discharged from a combustion apparatus such as a boiler. The $CO_2$ contained in the exhaust gas is recovered by a carbon dioxide-separating and recovering apparatus which performs a chemical absorption method or a physical adsorption method. In the chemical absorption method, $CO_2$ contained in the exhaust gas is absorbed in an absorption liquid such as an amine compound aqueous solution, and the absorption liquid that has absorbed the $CO_2$ is heated to discharge the $CO_2$ from the absorption liquid. The usable energy can be used to heat the absorption liquid that has absorbed the $CO_2$ in the chemical absorption method. In the physical adsorption method, $CO_2$ contained in the exhaust gas is adsorbed on an adsorbent such as active carbon or zeolite, and the adsorbent on which the $CO_2$ is adsorbed is heated to desorb the $CO_2$ from the adsorbent. The usable energy can be used to heat the adsorbent on which the $CO_2$ has been adsorbed in the physical adsorption method.

The usable energy may be used to react $CO_2$ with hydrogen ($H_2$) to convert it to methane ($CH_4$). $CO_2$ recovered from the exhaust gas by a carbon dioxide-separating and recovering apparatus or the like may be used. By bringing a raw material gas containing $CO_2$ and $H_2$ into contact with a catalyst using the catalyst for promoting the reaction between $CO_2$ and $H_2$ (methanation reaction), $CH_4$ is generated from the raw material gas, but the reaction does not proceed sufficiently if the temperature of the raw material gas is low. The usable energy can be used to heat a raw material gas containing $CO_2$ and $H_2$.

The usable energy may be used in an IS cycle to produce hydrogen from water. In the IS cycle, water, iodine (I), and sulfur (S) are reacted to produce hydrogen iodide (HI), and the hydrogen iodide is then pyrolyzed to produce hydrogen. The usable energy can be used to pyrolyze hydrogen iodide.

The usable energy may be used in an ISN cycle to produce ammonia ($NH_3$) from water and nitrogen ($N_2$). In the ISN cycle, nitrogen is reacted with hydrogen iodide produced in the IS cycle to produce ammonium iodide ($NH_4I$), and the ammonium iodide is then pyrolyzed to produce ammonia. The usable energy can be used to pyrolyze the ammonium iodide.

Reference Signs List

> 10, 60, 80, 100, 110, 115 heat generating device
> 11, 61, 81 container
> 12, 62, 82 heater
> 13, 63, 83 conductive wire part
> 14, 106, 112, 133, 143 heat generating element
> 15 hydrogen supply unit
> 16 vacuum evacuation unit
> 17, 64, 84 reflection unit
> 30 temperature sensor
> 35, 66, 88 reflection plate
> 39, 107, 113 base
> 40, 108, 134, 144 multilayer film
> 41 first layer
> 42 second layer
> 43, 136, 146 heterogeneous material interface
> 65 window portion
> 74 temperature sensor
> 81a first container
> 81b second container
> 85 first chamber
> 86 second chamber
> 101 gas tank
> 135 third layer
> 145 fourth layer

**Claims**

1. A heat generating device comprising:

> a hollow container;
> a heat generating element provided inside the container,
> a heater for heating the heat generating element;
> a conductive wire part connecting a wall portion of the container and the heater;
> a hydrogen supply unit for supplying a hydrogen-containing hydrogen-based gas to the heat generating element; and
> a vacuum evacuation unit for evacuating the inside of the container, wherein
> the heat generating element includes a base composed of a hydrogen storage metal, a hydrogen storage alloy, or a proton conductor, and a multilayer film provided on a surface of the base; and
> the multilayer film has a stacking structure in which a first layer and a second layer are stacked, the first layer being made of a hydrogen storage metal or a hydrogen storage alloy and having a thickness of less than 1000 nm, and the second layer being made of a hydrogen storage metal or a hydrogen storage alloy, which is different from that of the first layer, or ceramics and having a thickness of less than 1000 nm, and wherein
> when the heat generating element is heated by the heater, the hydrogen permeates through or diffuses through a heterogeneous material interface which is an interface between the first layer and the second layer by quantum diffusion, and thus the heat generating element generates heat; and
> when heater temperature is $T_H$ [K], external environmental temperature is $T_W$ [K], equivalent heat conduction area is $A_{HC}$ [m$^2$], equivalent thermal conductivity is $k_{eq}$ [W/mK], equivalent thermal conduction length is $L_{eq}$ [m], sample radiation surface area is $A_S$ [m$^2$], sample surface temperature is $T_S$ [K], equivalent emissivity is $\varepsilon_{eq}$, Stefan-Boltzmann constant is $\sigma$ [W/m$^2$K$^4$], energy required for maintaining operation is $P_m$ [W], and thermal energy generated by the heat generating element is $H_{ex}$ [W], the following formula (1) is satisfied:

$$A_{HC}\eta_{eq}(T_H - T_W) + A_S\varepsilon_{eq}\sigma(T_S{}^4 - T_W{}^4) + P_m < H_{ex} \qquad (1)$$

wherein, $\eta_{eq}$ is a value ($k_{eq}/L_{eq}$) obtained by dividing the equivalent thermal conductivity by the equivalent thermal conduction length.

2. The heat generating device according to claim 1, further comprising a reflection unit configured to reflect radiant heat of the heat generating element.

3. The heat generating device according to claim 2, wherein the reflection unit includes a plurality of reflection plates arranged to be spaced apart from each other.

4. The heat generating device according to any one of claims 1 to 3, further comprising a radiation temperature indicator, wherein the container has a window portion through which infrared rays are transmitted, and the temperature of the heater is detected by the radiation temperature indicator.

5. The heat generating device according to any one of claims 1 to 4,
   wherein

   the container includes a first container and a second container provided inside the first container,
   the heat generating element is provided inside the second container to partition the inside of the second container into a first chamber and a second chamber,
   the vacuum evacuation unit evacuates the inside of the first container,
   the heater is provided inside the first container and heats the heat generating element via the second container,
   the conductive wire part connects a wall portion of the first container and the heater, and
   the hydrogen supply unit introduces the hydrogen-based gas into the inside of the first chamber to generate a difference between pressures of the hydrogen in the first chamber and the second chamber.

6. The heat generating device according to claim 5, further comprising an inert gas introduction portion configured to introduce an inert gas into the inside of the second chamber.

# FIG. 1

# FIG. 2

# FIG. 3

# FIG. 4

# FIG. 5

# FIG. 6

## FIG. 7

## FIG. 8

# FIG. 9

# FIG. 10

## FIG. 11

## FIG. 12

## FIG. 13

# FIG. 14

# FIG. 15

FIG. 16

# FIG. 17

# FIG. 18

## FIG. 19

<div align="center">

**INTERNATIONAL SEARCH REPORT**

</div>

| International application No. |
|---|
| PCT/JP2021/013347 |

| A. CLASSIFICATION OF SUBJECT MATTER |
|---|
| Int. Cl. F24V30/00(2018.01)i |
| FI: F24V30/00 302 |

According to International Patent Classification (IPC) or to both national classification and IPC

| B. FIELDS SEARCHED |
|---|
| Minimum documentation searched (classification system followed by classification symbols) |
| Int. Cl. F24V30/00 |

Documentation searched other than minimum documentation to the extent that such documents are included in the fields searched

Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | WO 2018/230447 A1 (CLEAN PLANET INC.) 20 December | 1-3 |
| Y | 2018, claims, paragraphs [0119]-[0141], fig. 22- | 4 |
| A | 26, claims, paragraphs [0119]-[0141], fig. 22-26, | 5-6 |
|   | claims, paragraphs [0119]-[0141], fig. 22-26 | |
| Y | JP 64-083124 A (ULVAC CORP.) 28 March 1989, claims, fig. 1-4 | 4 |
| Y | JP 2004-200518 A (KYOCERA CORP.) 15 July 2004, paragraphs [0019]-[0042], fig. 1 | 4 |
| A | WO 2018/062115 A1 (CLEAN PLANET INC.) 05 April 2018, entire text, all drawings | 1-6 |

☒ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10.05.2021 | 25.05.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/013347 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2015/008859 A2 (HYDROGEN ENGINEERING APPLICATION & DEVELOPMENT COMPANY) 22 January 2015, entire text, all drawings | 1-6 |
| A | JP 06-265662 A (NIPPON TELEGRAPH AND TELEPHONE CORP.) 22 September 1994, entire text, all drawings | 1-6 |
| A | JP 06-257864 A (NIPPON TELEGRAPH AND TELEPHONE CORP.) 16 September 1994, entire text, all drawings | 1-6 |
| A | WO 2019/016606 A1 (IH IP HOLDINGS LIMITED) 24 January 2019, entire text, all drawings | 1-6 |

Form PCT/ISA/210 (continuation of second sheet) (January 2015)

| International application No. |
| --- |
| PCT/JP2021/013347 |

| Patent Documents referred to in the Report | Publication Date | Patent Family | Publication Date |
| --- | --- | --- | --- |
| WO 2018/230447 A1 | 20.12.2018 | US 2020/0208885 A1 claims, paragraphs [0155]-[0177], fig. 22-26<br>EP 3640564 A1<br>KR 10-2020-0018596 A<br>CN 11109487 A | |
| JP 64-083124 A | 28.03.1989 | (Family: none) | |
| JP 2004-200518 A | 15.07.2004 | (Family: none) | |
| WO 2018/062115 A1 | 05.04.2018 | US 2019/0257551 A1 entire text, all drawings<br>EP 3521730 A1<br>CN 109716040 A<br>KR 10-2019-0061019 A | |
| WO 2015/008859 A2 | 22.01.2015 | US 2016/0155518 A1 entire text, all drawings<br>EP 3023991 A2<br>CA 2918343 A1<br>CN 105493196 A<br>KR 10-2016-0041937 A | |
| JP 06-265662 A | 22.09.1994 | (Family: none) | |
| JP 06-257864 A | 16.09.1994 | (Family: none) | |
| WO 2019/016606 A1 | 24.01.2019 | US 2020/0156182 A1 entire text, all drawings | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. KITAMURA ; A. TAKAHASHI ; K. TAKAHASHI ; R. SETO ; T. HATANO ; Y. IWAMURA ; T. ITOH ; J. KASAGI ; M. NAKAMURA ; M. UCHIMURA.** Excess heat evolution from nanocomposite samples under exposure to hydrogen isotope gases. *International Journal of Hydrogen Energy,* 2018, vol. 43, 16187-16200

- Heat Transfer. The Japan Society of Mechanical Engineers, 2009, 208-209